(19) Europäisches Patentamt
European Patent Office
Office européen des brevets

(11) **EP 4 361 206 A1**

(12) **EUROPEAN PATENT APPLICATION**

(43) Date of publication:
**01.05.2024  Bulletin 2024/18**

(21) Application number: **23206518.5**

(22) Date of filing: **27.10.2023**

(51) International Patent Classification (IPC):
*C08J 9/12* (2006.01)   *B29C 44/34* (2006.01)
*C08G 63/08* (2006.01)   *C08L 67/04* (2006.01)

(52) Cooperative Patent Classification (CPC):
(C-Sets available)
**C08J 9/122; B29C 44/3446; C08G 63/08;
C08L 67/04;** B29K 2067/046; C08J 2201/03;
C08J 2203/06; C08J 2367/04         (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **31.10.2022  JP 2022175118**

(71) Applicant: **Ricoh Company, Ltd.**
**Tokyo 143-8555 (JP)**

(72) Inventors:
• **KOBAYASHI, Masahide**
**Tokyo, 143-8555 (JP)**
• **NEMOTO, Taichi**
**Tokyo, 143-8555 (JP)**
• **YAMAMOTO, Atsushi**
**Tokyo, 143-8555 (JP)**

(74) Representative: **Marks & Clerk LLP**
**15 Fetter Lane**
**London EC4A 1BW (GB)**

(54) **POLYLACTIC ACID RESIN COMPOSITION, FOAMED POLYLACTIC ACID RESIN, METHOD OF MANUFACTURING FOAMED POLYLACTIC ACID RESIN, AND PRODUCT**

(57)     A polylactic acid resin composition contains a polyactic acid resin satisfying:
(1) the polylactic acid resin has a melt viscosity of 2,000 to 40,000 Pa·s at 190 degrees C; and
(2) the polylactic acid resin has a region of a weight average molecular weight Mw of 1,000 or less of 10 or less percent and a region of a weight average molecular weight Mw of 500,000 or more of 20 or more percent in a region of a weight average molecular weight Mw of 100 or more of a molecular weight distribution as measured by gel permeation chromatography, wherein the polylactic acid resin accounts for 90 or more percent of the polylactic acid resin composition.

## FIG. 1

EP 4 361 206 A1

(52) Cooperative Patent Classification (CPC): (Cont.)

C-Sets
**C08L 67/04, C08L 67/04**

**Description**

BACKGROUND

Technical Field

The present disclosure is related to a polylactic acid resin composition, a foamed polylactic acid resin, a method of manufacturing foamed polylactic acid resin, and a product.

Description of the Related Art

Plastic products are processed into shapes such as bags, trays, or containers, which are widely distributed. Most plastic products are, however, undecomposable in the natural world, causing a problem of disposal after use. This downside of plastic products triggers active material development for replacing such non-biodegradable plastic in the natural world with biodegradable plastic. Of the biodegradable plastics, polylactic acid (PLA) keeps the same properties as those of typical plastic such as polystyrene, so PLA is an appealing substitute for non-biodegradable plastic.

A foamed sheet obtained by expanding PLA to reduce the amount of PLA used has been proposed as a sheet with good moldability to make PLA popular. On the other hand, PLA is known to be difficult to expand. This is because softened and molten PLA by heating quickly turns into a low sticky liquid, which narrows a range of melt viscosity suitable for expanding PLA.

In attempts to furnish PLA that achieves a melt viscosity and tension suitable for foam molding, adding a high molecular weight acrylic resin has been proposed in the literature such as Japanese Unexamined Patent Application Publication No. 2022-175118, and a modified PLA obtained by copolymerizing PLA with another polyester structure resulting from dehydration condensation of succinic acid and ethylene glycol has been proposed in the literature such as Japanese Unexamined Patent Application Publication No. H8-198992. However, these proposals need to be revised to achieve suitable melt viscosity and tension, so striking a balance between maintaining a shape and expansion in a high temperature environment is challenging and biodegradability deteriorates.

In addition, to apply a foamed sheet to a heat-resistant vessel, the vessel is required to keep its shape and dimensions. Applying a sufficiently thick foamed sheet-made chiefly of polylactic acid-and which maintains its mechanical strength to a heat resistant material has been proposed in Japanese Patent No. 4299490 (Japanese Unexamined Patent Application Publication No. 2003-301066). Regrettably, this application is difficult to balance heat resistance, mechanical strength, and biodegradability for a thin, resource-saving foam sheet with good mold processability.

Additionally, in an attempt to afford a tough and flexible foam, a foam containing inorganic particles with a low gel proportion has been proposed in Japanese Unexamined Patent Application Publication No. 2022-27146. This foam is difficult to balance high melt viscosity and heat resistance.

SUMMARY

According to embodiments of the present disclosure, polylactic acid resin composition is provided that contains a polyactic acid resin satisfying: (1) the polylactic acid resin has a melt viscosity of 2,000 to 40,000 Pa·s at 190 degrees C; and (2) the polylactic acid resin has a region of a weight average molecular weight Mw of 1,000 or less of 10 or less percent and a region of a weight average molecular weight Mw of 500,000 or more of 20 or more percent in a region of a weight average molecular weight Mw of 100 or more of a molecular weight distribution as measured by gel permeation chromatography, wherein the polylactic acid resin accounts for 90 or more percent of the polylactic acid resin composition.

As another aspect of embodiments of the present disclosure, a foamed polylactic acid resin is provided which is manufactured by expanding the polylactic acid resin composition mentioned above.

As another aspect of embodiments of the present disclosure, a method of manufacturing a foamed polylactic acid resin is provided that includes melting the polylactic acid resin composition mentioned above within a temperature range of from a melting point of the polylactic acid resin to the melting point + 40 degrees C to obtain a molten polylactic acid resin; adding a compressive fluid to be melted in the polylactic acid resin composition; and extrusion expanding the polylactic acid resin composition in a temperature range of from the melting point - 60 degrees C to the melting point + 120 degrees C.

As another aspect of embodiments of the present disclosure, a product is provided that contains the foamed polylactic acid resin mentioned above.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a phase diagram illustrating the state of a substance against the temperature and pressure of compressive fluid suitably used in manufacturing the polylactic acid (PLA) composition according to an embodiment of the present invention and the foamed PLA resin according to an embodiment of the present invention;

FIG. 2 is a phase diagram illustrating the definition of the regions of a compressive fluid suitably used in manufacturing the PLA composition according to an embodiment of the present invention and the foamed PLA resin according to an embodiment of the present invention;

FIG. 3 is a schematic diagram illustrating a continuous kneading device utilized in the method of manufacturing the foamed PLA sheet according to an embodiment of the present disclosure.

FIG. 4 is a schematic diagram illustrating a continuous device for resin foaming utilized in the method of manufacturing the foamed PLA resin according to an embodiment of the present disclosure; and

FIG. 5 is a schematic diagram illustrating a continuous foaming device for use in manufacturing the PLA resin composition according to an embodiment of the present disclosure.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

DESCRIPTION OF THE EMBODIMENTS

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Embodiments of the present invention are described in detail below with reference to accompanying drawings. In describing embodiments illustrated in the drawings, specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

Polylactic Acid (PLA) Resin Composition

The PLA resin composition of the present disclosure, also referred to as " resin composition", contains a PLA resin satisfying the following conditions (1) and (2) and other optional components. The PLA resin accounts for 90 or more percent of the PLA resin composition.

(1) the PLA resin has a melt viscosity of 2,000 to 40,000 Pa·s at 190 degrees C; and
(2) the PLA resin has a region of a weight average molecular weight Mw of 1,000 or less of 10 or less percent and a region of a weight average molecular weight Mw of 500,000 or more of 20 or more percent in the molecular weight distribution of the region of a weight average molecular weight Mw of 100 or more as measured by gel permeation chromatography (GPC).

The PLA resin composition of the present disclosure has good heat resistance and can be used as a heat resistant food vessel, which is described in detail later. The PLA resin composition in the present disclosure has yet to be expanded.

The PLA resin composition of the present disclosure satisfies the conditions (1) and (2) above so that the PLA resin composition is biodegradable and has high productivity, high melt viscosity and tension, excellent heat resistance, and excellent mechanical strength. In other words, the PLA resin composition of the present disclosure is biodegradable by microorganisms, highly productive, durable for use, and less burden on the environment at disposal after use.

The PLA resin composition of the present disclosure is described below with reference to embodiments. It is to be noted that the following embodiments are not limiting the present disclosure and any deletion, addition, modification, change, etc. can be made within a scope in which man in the art can conceive including other embodiments, and any of which is included within the scope of the present invention as long as the effect and feature of the present disclosure are demonstrated.

PLA Resin A

Since microorganisms decompose the PLA resin mentioned above, this resin is appealing as a low environmental impact polymer material friendly to the environment (refer to Inoue, Y, (2001), Structure, Properties, Biodegradability of Aliphatic Polyesters, Polymers, vol. 50, June edition, 374 to 377).

Examples of the PLA resin include, but are not limited to, a copolymer (DL-lactic acid) of D-form (D-lactic acid) and L-form (L-lactic acid); a homopolymer of either D-lactic acid or L-lactic acid; and a ring-opening polymer of one or more lactides selected from the group consisting of D-form (D-lactide), L-form (L-lactide), and DL-lactide. These can be used alone or in combination. The PLA mentioned above can be synthesized or procured.

Melt Viscosity

The melt viscosity of the PLA resin is from 2,000 to 40,000 Pa·s, preferably from 2,000 to 30,000 Pa·s, and more preferably from 2,000 to 20,000 Pa·s at 190 degrees C. A melt viscosity of the PLA resin of less than 2,000 Pa·s at 190 degrees C degrades its strength, appearance, and expansion ratio at high temperatures. A melt viscosity of the PLA resin surpassing 40,000 Pa·s at 190 degrees C degrades its strength and recyclability at high temperatures. A melt viscosity of the PLA resin from 2,000 to 40,000 Pa·s at 190 degrees C enhances its strength and appearance at high temperatures, recyclability and biodegradability, minimally causes hydrolysis, and modifies the PLA resin during kneading or extrusion molding.

The melt viscosity of the PLA resin can be confirmed by measuring a PLA resin dried at 80 degrees C for two or more hours with a flow tester under the following measuring conditions.

Measuring Conditions

· Flow tester: CFT-100D or CFT-100EX (both are available from Shimadzu Corporation)
· Test temperature: 190 degrees Celsius
· Measuring mode: constant temperature method
· Nozzle dimension: diameter of 1 mm with length of 10 mm

The melt viscosity of the PLA resin measured at 190 degrees C reflects the melt viscosity of the PLA resin itself in the case that the PLA resin composition contains the PLA resin alone, and if the PLA resin composition contains two or more types of PLA resins, its melt viscosity demonstrates characteristics peculiar to the mixtures of the two or more types.

In the case that the PLA resin composition contains a cross-linking agent described later and the cross-linking reaction takes place between one or two or more types of PLA resins, the melt viscosity reflects the characteristics of the cross-linked PLA resin.

Molecular Weight

Region Where Weight Average Molecular Weight Mw Is 1,000 or Less

The region of a weight average molecular weight Mw of the PLA resin of 1,000 or less accounts for 10 or less percent, preferably 5 or less percent, and more preferably 3 or less percent in the region of a weight average molecular weight Mw of 100 or more of the molecular weight distribution. A region of the weight average molecular weight Mw of 1,000 or less surpassing 10 percent decreases the viscosity and accelerates hydrolysis, inhibiting expansion in the case that the PLA resin composition is used to manufacture a foamed PLA resin.

Region Where Weight Average Molecular Weight Mw Is 500,000 or More

The region of the weight average molecular weight Mw of the PLA resin of 500,000 or more accounts for 20 or more percent, preferably 30 or more percent, more preferably 50 or more percent, and furthermore preferably 65 or more percent in the region of a weight average molecular weight Mw of 100 or more of the molecular weight distribution.

A region of the weight average molecular weight Mw of 500,000 or more of less than 20 percent fails to raise the viscosity sufficiently, reducing the stability during expansion in the case that the PLA resin composition is used to manufacture a foamed PLA resin. The upper limit of the region of a weight average molecular weight Mw of the PLA resin of 500,000 or more in the region of a weight average molecular weight of 100 or more is not particularly limited and can be suitably selected to suit to a particular application. The upper limit is preferably 80 or less percent in terms of viscosity.

Weight Average Molecular Weight Mw

The weight average molecular weight Mw of the PLA resin has no particular limit. It can be suitably selected to suit to a particular application as long the condition (2) above is satisfied. The weight average molecular weight Mw is preferably 250,000 or more and more preferably 280,000 or more. The upper limit of the weight average molecular weight Mw of the PLA resin is not particularly limited. The upper limit is preferably 600,000 or less and more preferably 450,000 or less. The upper and lower limits of the weight average molecular weight Mw of the PLA resin are not particularly limited. The weight average molecular weight is preferably from 250,000 to 600,000 and more preferably from 280,000 to 450,000.

A weight average molecular weight Mw of the PLA resin of 250,000 or more increases the surface tension in a foamed cell at the foaming temperature in the case that the PLA resin composition is used for obtaining a foamed PLA resin. Under such an increased surface tension, bubble breakage is minimized, leading to an advantage of affording a foam with a high expansion ratio. In addition, a mixture of a recyclable resin composition with a PLA resin composition in this region of the weight average molecular weight has a high heat resistance.

Molecular Weight Distribution Mv/Mn

The molecular weight distribution Mw/Mn, a quotient obtained by dividing the Mw of the PLA resin by the Mn thereof, is not particularly limited and can be suitably selected to suit to a particular application as long the condition (2) above is satisfied. The Mw/Mn is preferably 1.3 or more, more preferably 1.5 or more, and furthermore preferably 1.7 or more. The upper limit of the Mw/Mn is not particularly limited. This limit is preferably 2.8 or less, more preferably 2.65 or less, more preferably 2.4 or less, and furthermore preferably 2.2 or less. The lower and upper limits can be combined. The MV/Mn is preferably from 1.3 to 2.8, more preferably from 1.5 to 2.65, furthermore preferably from 1.7 to 2.4, and particularly preferably from 1.7 to 2.2. An Mw/Mn of 1.3 to 2.8 minimizes unintended minor reactions such as decomposition and cross-linking reactions in the polymerization. An Mw/Mn of 1.7 or more increases the variance in the molecular chain length. This increased variance allows regions with low stickiness and high stickiness to exist in the case that the PLA resin composition is used to manufacture a foamed PLA resin. The presence of these regions is preferable because bubble breakage is less likely to occur, increasing the expansion ratio.

The Mw can be measured by any method that suits to a particular application. One way of measuring the Mw is gel permeation chromatography (GPC), which separates components by size.

Specifically, the PLA resin composition mentioned above is dissolved in chloroform to achieve a concentration of 0.5 percent by mass, thus obtaining a measurement sample. A total of 20 $\mu$L of the measurement sample was measured according to the following measuring conditions. In addition, a simple dispersion polystyrene reference sample is subjected to GPC in the same manner as above to create a molecular weight calibration curve in advance.

The Mn and Mw of the PLA resin and the regions (percent) of an Mw of 1,000 or less and an Mw of 500,000 or more to the region of an Mw of 100 or more in the molecular weight distribution of PLA resin can be calculated from the molecular weight distribution of the PLA resin using the molecular weight calibration curve.

Measuring Conditions

· Instrument: HLC-8320GPC, available from by TOSOH CORPORATION
· Column: TSKgel® SuperHZM-H (available from TOSOH CORPORATION)
· Temperature: 40 degrees C
· Solvent: Chloroform
· Amount of infusion: 20 $\mu$L
· Rate of flow: 0.6 mL/min.

As in the melt viscosity of the PLA resin at 190 degrees C, the molecular weight of the PLA resin reflects the characteristics of the molecular weight of the PLA resin itself in the case that the PLA resin composition contains the PLA resin alone, and if the PLA resin composition contains two or more types of PLA resins, its molecular weight demonstrates characteristics peculiar to the mixtures of the two or more types.

In the case that the PLA resin composition contains a cross-linking agent described later and the cross-linking reaction takes place between one or two or more types of PLA resins, the molecular weight reflects the characteristics of the cross-linked PLA resin.

Strain-hardening Exponent

The PLA resin composition has a strain-hardening exponent of 2 or more, the strain-hardening exponent being calculated based on the following Relationship 1 in a double logarithmic plot curve of [(time) - (uniaxial elongational viscosity)] obtained by melt uniaxial elongational viscosity measurement within a range of $\pm 10$ degrees Celsius of a melting point of the polylactic acid resin. The strain-hardening exponent of the PLA resin is preferably 2 to 50, more preferably 2 to 25, and furthermore preferably 2 to 9. A strain-hardening exponent of less than 2 is unlikely to enhance the rheology effects of the PLA resin composition. A strain-hardening exponent of 2 to 50 facilitates manufacturing of the PLA resin composition and enhances mold stability.

$$\text{Strain-hardening exponent} = a2/a1 \qquad \text{Relationship 1}$$

In Relationship 1, a1 represents the gradient in the linear region in the double logarithmic plot curve of [(time) - (uniaxial elongational viscosity)], and a2 represents the gradient in the non-linear region in the double logarithmic plot curve of [(time) - (uniaxial elongational viscosity)].

In the present disclosure, a PLA resin composition dried at 80 degrees C for two or more hours is subjected to measuring with a rheometer under the following conditions to confirm the strain-hardening exponent.

Measuring Conditions

· Measuring device: ARES-G2 (available from TA Instruments)
· Measuring jig: Elongation viscosity fixture (EVF), available from TA
· Measuring condition: The target PLA resin is measured at a temperature range of at least 10 to 50 degrees C higher than the melting point obtained by differential scanning calorimetry (DSC) and at a strain velocity of at least $1.0 \text{ s}^{-1}$ followed by calculating the strain-hardening exponent represented by Relationship 1 in the double logarithmic plot curve of [(time) - (uniaxial elongational viscosity)].

a1 above is obtained in the following manner instead of the simple method.

Specifically, the frequency dependency data of shearing viscosity in a frequency range of 0.1 to 100 rad/s are obtained under the conditions of a strain = 10 percent, temperature = same temperature as that of uniaxial elongational viscosity, and GAP = 0.7 to 1.5 mm using ARES-G2 (available from TA Instruments) and a 25 mm parallel plate as a measuring jig. The three-time values of 3 ηs of the obtained shearing viscosity are plotted in the double logarithmic plot curve of [(time) - (uniaxial elongational viscosity)], and the gradient of this plot line is defined as gradient a1 of the linear region in the double logarithmic plot curve of [(time) - (uniaxial elongational viscosity)].

Ratio of L form to D form

This PLA resin contains either the D-form or L-form of lactic acid as a constituent monomer unit preferably accounts for 90.0 to 99.8 percent and more preferably 94.0 to 99.8 percent. A PLA resin with a proportion of either the D-form or L-form of lactic acid as a constituent monomer unit of the PLA resin of 98.0 or more percent can be referred to as a PLA resin in a high optical purity region. A PLA resin with a proportion of less than 98.0 percent can be referred to as a PLA resin in a low optical purity region compared with the PLA resin in the high optical purity region, although there are no particular limitations. A proportion of either the D-form or L-form of lactic acid of 94.0 to 99.8 percent as a constituent monomer unit of the PLA resin enables the PLA resin application to the food sector. Considering this application to the food sector, the proportion of the L-form of lactic acid is preferably 94 percent or more. A proportion of the L-form of lactic acid of 94 percent or more inhibits the decomposition of polymers at 40 or higher degrees C, reducing the amount of lactide eluted.

In the case that the PLA resin is a copolymer (DL-lactic acid) of D-lactic acid and L-lactic acid or a ring-opening polymer of one or two or more lactides selected from the group consisting of D-lactide, L-lactide, and DL-lactide, as the lesser of the optical isomer of the D-form and the L-form decreases, the crystallinity is likely to increase and the melting point and the rate of crystallization tend to become high. Conversely, as the minor optical isomer of the D-form and L-form increases, the crystallinity will likely decrease so that the resin becomes amorphous over time. The crystallinity of the PLA resin is associated with the heat resistance of a foamed PLA resin of the PLA resin and the molding temperature of expansion if the PLA resin composition is used for the foamed PLA resin. In the case that PLA with a high optical purity is used, a sheet with a high expansion ratio is difficult to obtain, although the heat resistance is enhanced.

The content of either the D-form or L-form of lactic acid, both acting as constituent monomer units of the PLA resin in the PLA resin composition, can be analyzed by liquid chromatography-mass spectrometry (LC-MS) using an optically active column. The measurement procedure, measurement equipment, and LC-MS measurement conditions are as follows.

A PLA resin composition is subjected to frost shattering. A total of 200 mg of the powder of the frost shattered PLA resin composition is weighed with a precision balance and placed in a conical flask. A total of 30 mL of 1 normal sodium hydroxide is added to the flask. Next, the conical flask is shaken and heated to 65 degrees C to dissolve the foamed PLA sheet completely. Subsequently, the pH of the solution obtained is adjusted to 4 to 7 using 1 normal hydric acid. The solution is diluted to a particular volume using a volumetric flask to obtain a PLA solution. Then the PLA solution is filtered with a 0.45 $\mu$m membrane filter, followed by liquid chromatography analysis in the following measuring conditions.

The peak area derived from the D-form of lactic acid and the peak area derived from the L-form of lactic acid are obtained from the chart obtained, and the sum of both peak areas is calculated. Based on these values, the peak area ratio derived from the D-form of lactic acid and the peak area ratio derived from the L-form of lactic acid are then calculated. These results are used as the presence ratio to calculate the content ratios of D-form and L-form. This operation mentioned above is repeated three times and their results are arithmetically averaged. The average obtained is determined as the amount of D-form and L-form of lactic acid in the PLA resin in a PLA resin composition.

Measuring Conditions

HPLC device (liquid chromatograph): PU-2085 Plus system, available from JASCO Corporation
· Column: Chromolith® coated with SUMICHIRAL OA-5000 with an internal diameter of 4.6 mm and a length of 250 mm, available from Sumika Chemical Analysis Service, Ltd.
· Column temperature: 25 degrees Celsius
· Mobile phase: Liquid mixture of aqueous solution of 2 mM $CuSO_4$ with 2-propanol at a volume ratio of 95:5
· Rate of flow of mobile phase: 1.0 mL/minute
· Detector: UV 254 nm
· Infusing amount: 20 $\mu$L

If the larger of the peak area derived from the D-form of lactic acid and the peak area derived from the L-form of lactic acid accounts for 90 or more percent of the sum of both peak areas in the above measurement of the PLA resin composition, either the D-form or L-form of lactic acid as the constituent monomer units of the PLA resin can be said to account for 90 or more percent of the PLA resin composition.

The content of the PLA resin in the PLA resin composition to the entire mass of the PLA resin composition is 90 or more percent by mass in terms of biodegradability and recyclability. The content is preferably 95 or more percent by mass, more preferably 97 or more percent by mass, furthermore preferably 98 percent by mass, still more preferably 99 or more percent by mass, and particularly preferably 99.9 or more percent by mass. A PLA resin composition containing a PLA resin of less than 90 percent by mass fails to demonstrate good biodegradability. Moreover, mixing or copolymerizing the PLA resin with other components is not preferable to maintain the characteristics of green plastic and biomasplastic. A proportion of 90 or more percent by mass of the PLA resin prevents the problem of unbiodegraded components remaining even when the PLA resin is biodegraded.

The PLA resin composition may furthermore optionally contain organic components other than the PLA resin.

The organic component other than the PLA resin is not particularly limited and can be suitably selected to suit to a particular application. Examples include, but are not limited to, Compound B with an epoxy group, Compound C with an isocyanate group, Compound D with an oxazoline group, and Compound E with a carbodiimide group.

If the PLA resin composition contains such organic components, the content of the PLA resin in the PLA resin composition to the entire mass of the organic components in the PLA resin composition is preferably 90 or more percent by mass in terms of biodegradability and recyclability. The content is more preferably 95 or more percent by mass, furthermore more preferably 97 or more percent by mass, still more preferably 98 percent by mass, and particularly preferably 99 or more percent by mass.

The content of the PLA resin can be calculated from the ratio of the materials prepared for manufacturing a PLA resin composition. If the ratio is unclear, a PLA resin containing the components is subjected to gas chromatography mass-spectrometry (GC-MS) under the following conditions to identify the components by comparing them with a known polylactic acid as the reference sample. Optionally, the spectral area ratio obtained by nuclear magnetic resonance (NMR) measuring or another analysis method can be combined with GC-MS to calculate the ratio.

Measuring Conditions

· GC-MS instrument: GC-MS QP-2010, available from Shimadzu Corporation, accessory Py3030D, available from Frontier Laboratories Ltd.
· Separation column: Ultra ALLOY UA5-30M-0.25F, available from Frontier Laboratories Ltd.
· Heating temperature of sample: 300 degrees C
· Column oven temperature: held at 50 degrees C for 1 minute, then heated (15 degrees C/minute) to 320 degrees C (held for 6 minutes)
· Ionization method: Electron Ionization (E.I method)
· Mass detection range: 25 to 700 (m/z)

The same GC-MS analysis can be applied to Compound B with an epoxy group, Compound C with an isocyanate group, Compound D with an oxazoline group, and Compound E with a carbodiimide group to obtain their content.

Method of Manufacturing PLA Resin

The method of manufacturing the PLA resin composition is not particularly limited and can be suitably selected to suit to a particular application. One typical way of manufacturing the PLA resin composition is to carry out ring-opening polymerization of L-lactide, a cyclic dimer of lactic acid, with an initiator under the presence of a catalyst. It is preferable that the method of manufacturing the PLA resin composition include polymerization and other optional processes such as raw materials mixing, polymerization terminating, and removing monomers.

There is no particular limitation to a polymerization reactor for use in manufacturing the PLA resin composition mentioned above. The reactor can be suitably selected to suit to a particular application. The reactor can employ either a reaction process of continuous polymerization or a batch process. It is preferable to use a polymerization reactor supporting the melt viscosity of the PLA resin composition at each stage. Of the two, continuous polymerization is preferable for the polymerization reactor considering the device efficiency, characteristics of products, and quality. Continuous polymerization is preferable for mixing the raw material monomer (e.g., lactide) of the PLA resin composition and other optional materials such as a catalyst and an initiator. The continuous polymerization is also preferable to support the melt viscosity of polylactide containing lactide in an amount of 10 to 30 percent by mass because the viscosity is significantly low compared with that of polylactide containing lactide in an amount of less than 10 percent by mass.

The melt viscosity of the PLA resin composition at 190 degrees C is as high as 2,000 to 40,000 Pa·s, so the heat of reaction should be removed while reducing minor reactions accompanying the polymerization of monomers (e,g., lactide) such as ester exchange reaction and molecular chain severing. The polymerization reactor for use in manufacturing the PLA resin composition thus includes a single screw extruder, a twin screw extruder, a kneader, a non-shaft basket type stirrer, BIVOLAK, (available from Sumitomo Heavy Industries, Ltd.), N-SCR (available from MITSUBISHI HEAVY INDUSTRIES, LTD.), screw (eyeglass type), available from Hitachi, Ltd., screw (lattice type), and a tubular polymerization tank equipped with Kenics or Sulzer SMLX type static mixer. Of these, a twin screw extruder is particularly preferable as the polymerization reactor to enhance kneading properties, productivity, and the color tone, stability, and heat resistance of the PLA resin composition.

Placing a raw materials melting tank before a polymerization reactor is preferable to adopt continuous polymerization. The raw materials melting tank is not particularly limited. A full zone screw stirring tank is preferable to carry out efficient stirring.

Mixing Raw Materials

The raw materials mixing is carried out before polymerization and conducts mixing and melting raw materials of the PLA resin composition.

The method of melting the raw materials is not particularly limited and can be suitably selected to suit to a particular application. One way of melting is to raise the temperature of raw materials of the PLA resin composition.

The heating temperature at mixing and melting raw materials is not particularly limited and can be suitably selected to suit to a particular application as long as the raw materials can be mixed and melted. The heating temperature is preferably the melting point or higher of the monomer of the PLA resin, more preferably 100 or higher degrees C, and further more preferably 105 to 170 degrees C. The raw materials can be mixed and melted at the melting point or higher of the melting point of the monomer of the PLA during melting.

A catalyst can accelerate the polymerization, and may be added in the raw materials mixing in advance.

The content of a catalyst is not particularly limited and can be suitably selected to suit to a particular application. For example, it is preferably from 50 to 5,000 ppm and 100 to 1,000 ppm. A catalyst content of 50 or more ppm to the monomer mentioned above prevents the catalyst from deactivating, thus quantitatively processing ring opening addition polymerization of lactide. A content of a catalyst of 5,000 or less ppm to the monomer mentioned above reduces the coloring of the PLA resin or a decrease in the molecular weight of the PLA resin attributable to extreme minor reactions.

In order to prevent starting uneven polymerization in the polymerization, it is preferable to mix a monomer with an initiator before they are brought into contact with each other in advance.

The raw materials can be mixed in the raw materials melting tank.

The reaction conditions of the raw materials melting tank are not particularly limited and can be suitably selected to suit to a particular application as long as the temperature is the melting point or higher of the raw material monomer (e.g., melting point of 100 degrees C). The polymerization is preferably carried out at an inner temperature of 105 to 190 degrees C under a faint pressure in an inert gas atmosphere and more preferably an inner temperature of 110 to 180 degrees under an inner pressure of 10 to 550 kPa in an inert gas atmosphere. An inner pressure of 101.3 to 304 kPa is furthermore preferable to prevent an intake of ambient air and moisture into the reaction system. An inner pressure of 111.5 to 202.7 kPa is particularly preferable to facilitate handling and protect the system sufficiently from taking in moisture and ambient air.

Transferring the precursor, also referred to as prepolymer, of the PLA resin composition melted in the raw materials to the polymerization tank for the polymerization process without being solidified, is preferable to increase the manufacturing efficiency. However, transferring solidified matter formed into a predetermined shape, such as a chip, to the tank is allowed. The prepolymer formed into a chip in the middle of polymerization and appropriately stored can be transferred to the next polymerization tank. In the melting polymerization method, the prepolymer should be normally blocked from moisture, light, and oxygen to prevent deterioration.

To maintain the polymerization highly active, the moisture content in the prepolymer is 20 or less ppm, more preferably 10 or less ppm, and furthermore preferably 5 or less ppm.

Polymerization

In the polymerization, the PLA resin composition's raw material, lactic acid or lactide, is polymerized. The raw material can be polymerized with other optional monomers.

The method of polymerizing the monomer of the PLA resin is not particularly limited and can be selected among the known methods of manufacturing a PLA resin polymer. These methods include, but are not limited to, a direct melting polymerization method of lactic acid, solid phase polymerization method, and melting ring opening polymerization method (lactide method) of lactide as a dimer of lactic acid. Of these, a method of polymerizing monomers of the PLA resin includes a melt ring opening polymerization of lactide, which does not produce condensation water in the manufacturing process. For this reason, the polymer obtained is likely to have a large molecular weight, as large as a weight average molecular weight Mw of 300,000 or more, which is preferable.

The acid value of the polylactic acid in the PLA resin composition is associated with the residual monomer (lactic acid). As described above, lactic acid has hydroxyl that reduces the molecular weight due to hydrolysis and carboxyl that deactivates the activity of the catalyst. For this reason, the presence of lactic acid is not preferable in the reaction process of the ring opening addition condensation polymerization of lactide. Considering this characteristic, the acid value of the PLA resin is preferably 0.5 or less mgKOH/g and more preferably 0.1 or less mgKOH/g.

For example, the acid value of PLA resin can be measured according to JIS K 0070-1992 (Test methods for acid value, saponification value, ester value, iodine value, hydroxyl value and unsaponifiable matter of chemical products) format.

The PLA resin composition can be manufactured by polymerization in a compressive fluid. The method of manufacturing by polymerization in a compressive fluid can avoid heating at high temperatures, minimizing the production of degraded products.

Compressible Fluid

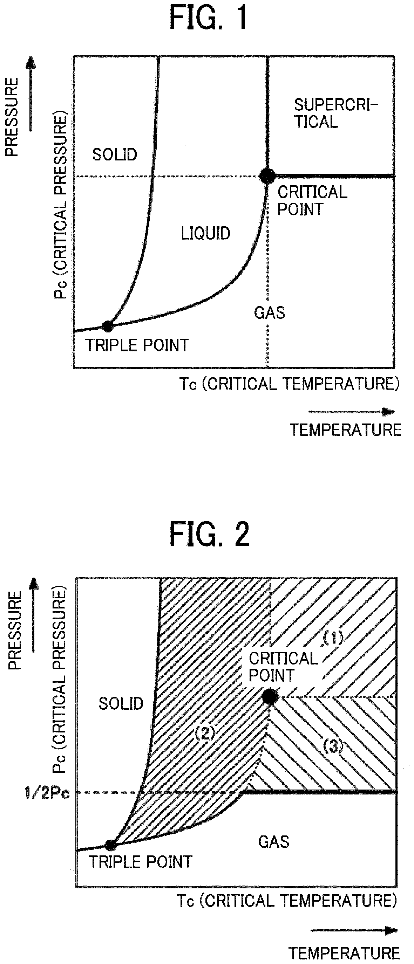

The compressive fluid used for manufacturing a PLA resin composition in one embodiment is described with reference to FIGS. 1 and 2.

FIG. 1 is a phase chart illustrating a substance against a compressive fluid's temperature and pressure, preferably used in manufacturing the PLA resin composition. FIG. 2 is a phase chart defining the range of a compressive fluid preferably used in manufacturing the PLA resin composition.

The compressive fluid in the present embodiment refers to in the state of a material present in one of the regions of (1), (2), and (3) in FIG. 2 in the phase graph illustrated in FIG. 1. In these regions, the material is known to have an extremely high density, behaving differently from the state under a normal temperature and pressure. The material in the region of (1) becomes a supercritical fluid.

The term "supercritical fluid" refers to a non-compressive high-density fluid in the temperature and pressure region surpassing the limit, critical point, of coexistence of gas and liquid, being present as a fluid not condensed under compression. It also represents a liquidized gas obtained by compressing a material present as a gas at a normal temperature of 25 degrees C and a normal pressure (1 atm) in one embodiment while being a liquid in the region of (2). In addition, the material is a high-pressure gas having a critical pressure Pc of 1/2 (1/2 Pc) or higher in one embodiment while it is present as air in the region of (3). The compressive fluid is preferably a supercritical fluid at the critical pressure or higher and the critical temperature or higher.

The substance forming the compressive fluid is not particularly limited and can be suitably selected to suit to a particular application. Specific examples include, but are not limited to, carbon monoxide, carbon dioxide, dinitrogen monoxide, nitrogen, methane, ethane, propane, 2, 3-dimethylbutane, ethylene, and dimethyl ether. These compressive fluids can be used alone or in combination. Of these, carbon dioxide is preferable because carbon dioxide is non-flammable and easy to handle and has a critical pressure of about 7.4 MPa and a critical temperature of about 31 degrees C, so supercritical carbon dioxide can readily be created.

The amount of the compressive fluid supplied to the raw materials of a molten PLA resin composition is not particularly limited and can be suitably selected to suit to a particular application. This amount depends on the solubility of the compressive fluid in PLA, which varies with factors such as the temperature, the pressure, and the combination of the compressive fluid with the type of PLA resin. If the PLA is used with carbon dioxide, the amount of carbon dioxide supplied is preferably 2 to 30 parts by mass to 100 parts by mass of the raw materials of the PLA resin composition. An amount of 2 or more parts by mass of carbon dioxide supplied to 100 parts by mass of the PLA resin avoids limiting plasticization of the PLA resin composition, reducing the minor reactions mentioned above. An amount of 30 or more parts by mass of carbon dioxide supplied to 100 parts by mass of the PLA resin allows a uniform reaction without separating carbon dioxide from the PLA resin composition.

The pressure at polymerization, i.e., the pressure of a compressive fluid, can be the pressure when the compressive fluid becomes a liquid gas {(2) in the phase chart of FIG. 2} or a high pressure gas {(3) in the phased charge of FIG. 2}, but preferably the pressure when it becomes a supercritical fluid {(1) in the phased charge of FIG. 2}. The state of a compressive fluid being a supercritical fluid promotes the dissolution or plasticization of the ring opening polymeric monomer of lactide, enabling polymerization uniformly and quantitatively.

Suppose carbon dioxide is used as the compressive fluid, factors such as the reaction efficiency and the rate of polymer conversion are considered. In that case, the pressure is preferably 3.7 or more MPa, more preferably 5 or more MPa, and furthermore preferably its critical pressure, 7.4 or more Mpa. If carbon dioxide is used as a compressive fluid, its temperature is preferably 25 or higher degrees C for the same reason.

In one embodiment, the concentration of a compressive fluid is not particularly limited and can be suitably selected to suit to a particular application as long as a ring opening polymeric monomer and a polymer produced from the monomer can be dissolved or plasticized at the concentration.

The method of manufacturing the PLA resin composition by polymerizing in a compressive fluid can be executed with a continuous kneading device, a device for continuously manufacturing a foamed resin, or a continuous foaming device, each described later.

Terminating Polymerization

In terminating polymerization, the polymerization reaction is terminated.

The method of terminating polymerization is not particularly limited and can be suitably selected to suit to a particular application. One way of terminating polymerization is to add an endcapping agent to a product produced during polymerization.

The endcapping agent is not anhydride and can be suitably selected to suit to a particular application as long as it reacts with the hydroxyl of a PLA resin. Examples include, but are not limited to, a phosphoric compound, a carboxylic acid compound, hydrochloric acid, or their anhydride. These can be used alone or in combination.

Specific examples of the phosphoric compound include, but are not limited to, phosphoric acid, phosphono triethyl acetate, and metaphosphoric acid.

Specific examples of the carboxylic acid compounds include, but are not limited to, benzoic acid, acetic acid, lactic acid, and citric acid.

Of these, monocarboxylic acid compounds are preferable. Anhydrous acetic acid, acetic acid, and citric acid are more preferable to allow a reaction with the hydroxyl terminal of the PLA resin.

These acid components serve as endcapping agents to deactivate the catalyst mentioned above.

The endcapping agent's content is not particularly limited and can be suitably selected to suit to the purpose of addition and the type of additives in the PLA resin composition. It is preferably 0.5 parts by mass to 100 parts by mass of the PLA resin composition. A content of the endcapping agent of 0.5 parts by mass to 100 parts by mass of the PLA resin composition enables a PLA resin to demonstrate its decomposability.

This endcapping agent should react with the hydroxyl of the PLA resin and is preferably the acid component of an acid such as carboxylic acid. The endcapping agent can thus deactivates the catalyst in terminating polymerization if the PLA resin composition contains a catalyst as one of the raw materials.

In addition, the catalyst in the PLA resin composition also catalyzes depolymerization, or decomposition, so leaving this catalyst active as is after polymerization is not preferable. However, physically removing the catalyst is difficult. Deactivation of the catalyst is preferable.

Removing Monomer

Removing monomers is carried out to remove non-reacted monomers after polymerization, preferably after terminating the polymerization. Removing monomers is advantageous to reduce the decrease in the molecular weight of the PLA resin and inhibits minor reactions.

The method of removing non-reacted monomers is not particularly limited and can be suitably selected to suit to a particular application. One way of removing it is to subject the PLA resin composition to a reduced pressure treatment with an instrument such as a vacuum pump, followed by removing the monomers with a filter.

The compressive fluid dissolves the non-reacted monomer, thus efficiently removing them. The compressive fluid can thus be removed simultaneously during monomer's removal.

Other Components

The PLA resin composition contains optional components other than the PLA resin as long as such components do not have adverse impacts.

The other optional components are not particularly limited and can be suitably selected to suit to a particular application. Examples include, but are not limited to, Compound B with an epoxy group, Compound C with an isocyanate group, Compound D with an oxazoline group, Compound E with a carbodiimide group, Cellulose Compound F, an initiator, a catalyst, and an additive. These can be used alone or in combination.

Of these, it is preferable that the PLA resin composition contain Compound B with an epoxy group, Compound C with an isocyanate group, Compound D with an oxazoline group, Compound E with a carbodiimide group, and Cellulose Compound F.

Compound B with Epoxy Group

Compound B with an epoxy group, also referred to as Cross-linking Agent B, is not particularly limited as long as it reacts with at least one of the hydroxyl group and carboxyl group of the PLA resin. One of such a compound is an epoxy functional (meta)acrylic-styrene-based cross-linking agent with two or three or more epoxy groups in its molecule.

The epoxy functional (meta)acrylic-styrene-based cross-linking agent with two or more epoxy groups in its molecule is obtained by copolymerizing a (meth)acrylic monomer with an epoxy group with a styrene monomer.

The (meth)acrylic monomers are not particularly limited and can be suitably selected to suit to a particular application. Specific examples include, but are not limited to, monomers with a 1,2-epoxy group such as glycidyl acrylate and glycidyl methacrylate.

The styrene monomer is not particularly limited and can be suitably selected to suit to a particular application. Specific examples include, but are not limited to, styrene and $\alpha$-methyl styrene.

The epoxy functional (meta)acrylic-styrene-based cross-linking agent with two or more epoxy groups in its molecule is not particularly limited and may contain a (meta)acrylic monomer without an epoxy group in its copolymerization component.

Specific examples include, but are not limited to, methyl acrylate, ethyl acrylate, propyl acrylate, butyl acrylate, cyclohexyl acrylate, methyl methacrylate, ethyl methacrylate, propyl methacrylate, butyl methacrylate, and cyclohexyl methacrylate. These can be used alone or in combination.

Compound C with Isocyanate Group

Compound C with an isocyanate group, also referred to as Cross-linking Agent C, is not particularly limited and can be suitably selected to suit to a particular application as long as it reacts with at least one of the hydroxyl group and carboxyl group of the PLA resin. One of such compounds is polyisocyanate with two or more isocyanate groups in its molecule.

Specific examples of the polyisocyanate with two or more isocyanate groups in its molecule include, but are not limited to, aliphatic diisocyanates such as 1,6-hexamethylene diisocyanate, 3-isocyanatomethyl-3,5,5-trimethylcyclohexyl isocyanate (isophorone diisocyanate), 1,4-tetramethylene diisocyanate, 2,4,4-trimethylhexamethylene diisocyanate, 2,2,4-trimethylhexamethylene diisocyanate, dicyclohexylmethane-4,4'-diisocyanate, methylcyclohexyl-2,4-diisocyanate, methylcyclohexyl-2,6-diisocyanate, xylylene diisocyanate, 1,3-bis(isocyanato)methylcyclohexane, tetramethylxylylene diisocyanate, transcyclohexane-1,4-diisocyanate, and lysine diisocyanate; alicyclic polyisocyanates such as isophorone diisocyanate, hydrogenated diphenylmethane diisocyanate, hydrogenated tolylene diisocyanate, hydrogenated xylylene diisocyanate, hydrogenated tetramethylxylylene diisocyanate, and cyclohexane diisocyanate; aromatic diisocyanates such as 2,4-toluylene diisocyanate, 2,6-toluylene diisocyanate, diphenylmethane-4, 4'-isocyanate, 1,5'-naphthene diisocyanate, tolidine diisocyanate, diphenylmethylmethane diisocyanate, tetraalkyldiphenylmethane diisocyanate, 4,4'-dibenzyl diisocyanate, and 1,3-phenylene diisocyanate; triisocyanate compounds such as lysine ester triisocyanate, triphenylmethane triisocyanate, 1,6,11-undecane triisocyanate, 1,8-isocyanato-4,4-isocyanatomethyloctane, 1,3,6- hexamethylene triisocyanate, bicycloheptane triisocyanate, an adduct of trimethylolpropane and 2,4-toluylene diisocyanate, and an adduct of trimethylolpropane and diisocyanate such as 1,6-hexamethylene diisocyanate; and modified polyisocyanate compounds obtained by reacting polyhydric alcohols such as glycerin and pentaerythritol with the aliphatic and aromatic diisocyanate compounds or the triisocyanate compounds. These can be used alone or in combination.

Compound D with Oxazoline Group

Compound D with an oxazoline group, also referred to as Cross-linking Agent D, is not particularly limited and can be suitably selected to suit to a particular application as long as it reacts with at least one of the hydroxyl group and carboxyl group of the PLA resin. One of such compounds has two or more oxazoline groups in its molecule.

Specific examples of the compounds having two or more oxazoline groups in its molecule include, but are limited to, oxazoline group-containing polystyrenes such as EPOCROS RPS-1005 and EPOCROS PX-3-RP-37, available from Nippon Shokubai Co., Ltd. These can be used alone or in combination.

Compound E with Carbodiimide Group

Compound E with a carbodiimide compound, also referred to as Cross-linking Agent E, is not particularly limited and can be suitably selected to suit to a particular application as long as it reacts with at least one of the hydroxyl group and carboxyl group of the PLA resin. One of such compounds is a polycarbodiimide-based cross-linking agent with two or more carbodiimide groups in its molecule.

Specific examples of the compounds with two or more carbodiimide groups in its molecules (polycarbodiimide cross-linking agent) include, but are not limtied to, polycarbodiimide (Carbodilite HMV-5CA-LC, available from Nisshinbo Chemical Inc.), and cyclic carbodiimide (Carbosista®, available from Teijin Limited). These can be used alone or in combination.

Of these cross-linking agents, epoxy functional (meta)acrylic-styrene-based cross-linking agents with two or more epoxy groups or polyisocyanate with two or more isocyanate groups in its molecule is preferable. In addition, epoxy functional (meta)acrylic-styrene-based cross-linking agents with three or more epoxy groups or polyisocyanate with three or more isocyanate groups in its molecule is more preferable to introduce a branch structure to the PLA resin, enhance the melt tension efficiently, and reduces the remnants of non-reacted matter. The PLA resin composition used with such a cross-linking agent can produce a foamed PLA resin with minimal merger and breakage of bubbles, increasing the expansion ratio.

Cross-linking Agent B, Cross-linking Agent C, Cross-linking Agent D, or Cross-linking Agent E contained in the PLA resin composition imparts the melt tension, tuning the expansion ratio of the foamed PLA resin suitable to produce a foamed PLA resin. As other methods of imparting the melting tension, there are a method of cross-linking a resin composition with a cross-linking agent or cross-linking helping agent, a method of cross-linking a resin composition with electron beams, and a method of adding another resin composition with a high melting tension.

The content of Cross-linking Agent B, group, Cross-linking Agent C, Cross-linking Agent D, or Cross-linking Agent E is not particularly limited. The content changes depending on the weight average molecular weight Mw of the PLA resin A and the molecular weight distribution (Mw/Mn) of the PLA resin. The amount of such a cross-linking agent added to impart the melt strength suitable for expansion will likely increase as the number of low molecular PLA resins increases. However, increasing the amount of the cross-linking agent tends to lead to the degradation of the biodegradability. For this reason, the content of Cross-linking Agent B, group, Cross-linking Agent C, Cross-linking Agent D, or Cross-linking Agent E is preferably 0.1 to 20 parts by mass, more preferably 0.1 to 10 parts by mass, and furthermore preferably 0.5 to 5 parts by mass to 100 parts by mass of PLA resin A.

The content of Compound B with an epoxy group is preferably from 0.1 to 10 parts by mass and more preferably from 0.5 to 5 parts by mass to 100 parts by mass of PLA resin A.

The content of Compound C with an isocyanate group is preferably from 0.1 to 10 parts by mass and more preferably from 0.5 to 5 parts by mass to 100 parts by mass of PLA resin A.

Cellulose Compound F

The PLA resin composition containing Cellulose Compound F can produce a foamed PLA resin described later with fine and uniform foaming and an increased strength, which is preferable. Cellulose Compound F is biodegradable and do not degrade the recyclability of the PLA resin composition.

As Cellulose Compound F, a compound with finely loosened fiber or enhanced hydrophobicity is preferable.

Specific examples include, but are not limited to, cellulose nanofibers (STARCEL® T-NC-374, available from SEIKO PMC CORPORATION), cellulose microfibers (Green Chip® CMF®, available from FP Chemical Industries Co., Ltd.), and fluorene cellulose fibers (available from Osaka Gas Chemicals Co., Ltd.).

The proportion of Cellulose Compound F is not particularly limited and can be suitably selected to suit to a particular application. The content of Cellulose Compound F is preferably from 0.1 to 10 parts by mass and more preferably from 0.5 to 5 parts by mass to 100 parts of PLA resin A.

Initiator

The primary structure of the PLA resin can be controlled by the type and content of the initiator mentioned above.

Specifically, the molecular weight of PLA resin can be adjusted by changing the ratio of lactide to an initiator, and a branch structure of the PLA resin can be formed based on the initiator's structure, i.e., the number of the functional groups with active hydrogen such as hydroxyl. The PLA resin obtained has a moderate branch structure with a high molecular weight, which is preferable.

The initiator is used to control the molecular weight of the PLA resin in the ring opening addition polymerization reaction of the PLA resin,

There is no specific limitation to the initiator and it can be suitably selected to suit to a particular application. Examples include, but are not limited to, an alcohol-based initiator and an amine-based initiator.

The alcohol-based initiator may be any of a monoalcohol of an aliphatic alcohol, a dialcohol of an aliphatic alcohol, and a polyhydric alcohol, and may be any of a saturated alcohol and an unsaturated alcohol.

Specific examples of the initiator include, but are not limited to, monoalcohols such as methanol, ethanol, propanol, butanol, pentanol, hexanol, heptanol, nonanol, decanol, lauryl alcohol, myristyl alcohol, cetyl alcohol, and stearyl alcohol; dialcohols such as ethylene glycol, 1,2-propanediol, 1,3-propanediol, 1,3-butanediol, 1,4-butanediol, hexanediol, nonanediol, tetramethylene glycol, and polyethylene glycol; polyhydric alcohols such as glycerol, sorbitol, xylitol, ribitol, erythritol, and triethanolamine; methyl lactate, and ethyl lactate. These can be used alone or in combination.

The content of the initiator is not particularly limited and can be suitably selected to suit to the molecular weight of a target PLA resin.

It is preferably 1/10,000 or less mol, more preferably 1/20,000 or less mol and even more preferably 1/40,000 or less mol to 1 mol of the monomer.

The moisture content of the initiator is not particularly limited and can be suitably selected to suit to a particular application. A dried initiator with a sufficiently low moisture content is preferable. The content is preferably 100 or less ppm, more preferably 50 or less ppm, and particularly preferably 10 or less ppm.

Catalyst

Catalysts for use in manufacturing the PLA resin composition is not particularly limited and can be suitably selected to suit to a particular application. They may be metallic catalysts containing metal atoms or organic catalysts containing no metal atom.

Specific examples of the metallic catalysts include, but are not limited to, tin compounds such as tin octylate, tin dibutylate, and tin di (2-ethylhexanoate); aluminum compounds such as aluminum acetylacetonate and aluminum acetate; titanium compounds such as tetraisopropyl titanate and tetrabutyl titanate; zirconium compounds such as zirconium isopropoxide; and antimony compounds such as antimony trioxide. These can be used alone or in combination.

In applications requiring safety and stability, using an organic compound (organic catalyst) containing no metal atom is preferable. Such an organic catalyst without a metal atom can provide a method of manufacturing a PLA resin that can accelerate polymerization with a good polymer conversion ratio compared with a traditional method of manufacturing through ring-opening polymerization of ring-opening polymerizable monomers using an organic catalyst containing a metal atom. The organic catalyst promotes ring-opening polymerization reaction of ring-opening polymerizable monomers. Any catalyst can be used as long as it can be removed and reproduced with alcohol after forming an active intermediate with a ring opening polymerizable monomer.

The organic catalyst preferably a compound acting as a basic nucleophile, more preferably a compound containing a basic nucleophilic nitrogen atom, and still more preferably a basic cyclic compound containing a nucleophilic nitrogen atom. A nucleophile or nucleophilic refers to a chemical species (and its nature) that reacts with an electrophile.

Such compounds are not particularly limited and can be suitably selected to suit to a particular application. Examples include, but are not limited to, cyclic monoamines, cyclic diamines (cyclic diamine compounds having an amidine skeleton), cyclic triamine compounds having a guanidine skeleton, heterocyclic aromatic organic compounds containing a nitrogen atom, and N-heterocyclic carbenes. A cationic organic catalyst used in the ring-opening polymerization reaction extracts hydrogen from the polymer main chain (back-biting), making a molecular weight distribution dull. It is thus difficult to obtain a PLA resin with a high molecular weight.

One example of the cyclic monoamine is quinuclidine.

Examples of the cyclic diamine include, but are not limited to, 1,4-diazabicyclo-[2.2.2] octane (DABCO) and 1,5-diazabicyclo (4,3,0)-5-nonene.

Examples of the cyclic diamine compound having an amidine skeleton include, but are not limited to, 1,8-diazabicyclo [5.4.0] undec-7-ene (DBU), and diazabicyclononene.

Examples of the cyclic triamine compound having a guanidine skeleton include, but are not limited to, 1,5,7-triazabicyclo [4.4.0] dec-5-ene (TBD) and diphenylguanidine (DPG).

Examples of the heterocyclic aromatic organic compound containing a nitrogen atom include, but are not limited to, N,N-dimethyl-4-aminopyridine (DMAP), 4-pyrrolidinopyridine (PPY), pyrocholine, imidazole, pyrimidine, and purine.

One example of the N-heterocyclic carbene is 1,3-di-tert-butylimidazol-2-ylidene (ITBU).

Of these, DABCO, DBU, DPG, TBD, DMAP, PPY, and ITBU are preferable because they are less affected by steric hindrance and have high nucleophilicity or have a boiling point at which they can be removed under reduced pressure.

Some of the organic catalysts are liquid at room temperature and have boiling points. One example is DBU. Almost all of such an organic solvent in PLA resin can be quantitatively removed by subjecting the obtained PLA resin to a reduced pressure treatment. The type of the organic solvent and conducting the removal treatment are determined depending on the purpose of use of the product.

The type and the amount of the organic catalyst used vary depending on the compressive fluid/ring-opening polymerizable monomer combinations. The content is preferably 0.01 to 15 mol percent, more preferably 0.1 to 1 mol percent, and further more preferably 0.3 to 0.5 mol percent to 100 mol percent of the ring-opening polymerizable monomer. A content of an organic catalyst below 0.01 mol percent causes the catalyst to deactivate prior to the completion of the polymerization reaction, failing to obtain a PLA with a target weight average molecular weight. Conversely, a content surpassing 15 mol percent makes it difficult to control polymerization reaction.

The reaction temperature of PLA can be set according to the catalyst's activity. The reaction temperature is preferably 180 or higher degrees C for tin octylate. In the case of an organic molecular catalyst, the temperature is preferably 60 or lower degrees C for DBU and producing PLA by solution polymerization or in a compressive fluid is preferable not to solidify the system.

Additive

Examples of the additives include, but are not limited to, a heat stabilizer, an antioxidant, and a plasticizer. These can be used alone or in combination.

There is no specific limit to the content of the additive mentioned above, and it is suitably determined to suit to a particular application. It is preferably from 2 or less percent by mass to the entire mass of the raw material of the PLA resin composition. A proportion of the additive of 2 or less percent by mass to the entire mass of the raw material of the PLA resin composition enhances recyclability.

The PLA resin composition can be applied to any applications without a particular application. The composition can be molded into, for example, particles, films, sheets, foamed sheets, foamed beads, injection-molded articles, and fibers. These can be used in a wide variety of applications, such as daily necessities, industrial materials, agricultural products, sanitary materials, pharmaceuticals, cosmetics, electrophotographic toners, packaging materials, electrical equipment materials, household electrical appliance housings, and automobile materials.

Foamed PLA Resin

The foamed PLA resin of the present disclosure is obtained by expanding the PLA resin composition of the present disclosure. The foamed PLA resin of the present disclosure refers to a state after the PLA resin composition of the present disclosure is expanded.

The foamed PLA resin of the present disclosure is suitably manufactured by the method of manufacturing a foamed PLA resin of the present disclosure described later.

The size, structure, and shape of the foamed PLA resin are not particularly limited and can be suitably selected to suit to a particular application. The foamed PLA resin can be shaped into, for example, a block-like shape and a sheet-like shape. Of these, the sheet-like shape is preferable to facilitate molding. The sheet-like foamed PLA resin may be referred to as a "foamed sheet" or a "foamed PLA sheet".

In the present specification, "sheet-like" refers to a shape with a mean thickness of 5 or less mm, preferably from 0.3 to 2 mm, and more preferably from 0.5 to 1.5 mm.

The thickness of the foamed PLA resin sheet can be measured with a caliper (for example, ABS-digimatic caliper CD-AX, available from Mitutoyo Corporation). The thickness is measured at 10 arbitrary points of the foamed PLA resin sheet and the average of the 10 points is defined as the "average thickness".

Expansion Ratio

The expansion ratio of the foamed PLA resin has no particular limit and can be suitably selected to suit to a particular application. For example, the ratio of polymerization is preferably from 2 to 50, more preferably from 5 to 45, and particularly preferably from 10 to 40. An expansion ratio of 2 or more leads to excellent light weight properties, while an expansion ratio of 50 or less results in good strength.

The method of measuring the expansion ratio of the foamed PLA resin is not particularly limited and can be suitably selected to suit to a particular application. One way of measuring is to use a buoyancy-type specific gravity meter.

As described above, the PLA resin in the PLA resin composition of the present disclosure has a melt viscosity of 2,000 to 40,000 Pa·s at 190 degrees C and the PLA resin has a region of a weight average molecular weight Mw of 1,000 or less of 10 or less percent and a region of a weight average molecular weight Mw of 500,000 or more of 20 or more percent in the region of a weight average molecular weight Mw of 100 or more of the molecular weight distribution as measured by GPC. Such a PLA resin composition can readily and stably form a foamed PLA resin even with a high expansion ratio of about 40.

The properties such as melt viscosity, weight average molecular weight Mw, number average molecular weight Mn, strain-hardening exponent, ratio of L-form or D-form of the foamed PLA resin can be measured in the same manner as for the PLA resin composition. The value obtained for each property of the foamed PLA resin is the same as that of the PLA resin composition.

Volatile Component

It is preferable that the PLA resin composition be substantially free of volatile components. Being substantially free of volatile components enhances the dimensional stability and reduces its impact on the human body and environment.

Examples of such volatile components include, but are not limited to, organic solvents and butane as a foaming agent.

As described in the method of manufacturing a foamed PLA resin described later, a compressive fluid such as carbon dioxide can act as a foaming agent to form a foamed PLA resin. Carbon dioxide used as a compressive fluid acting as a foaming agent obliviates the need to use a volatile foaming agent, easily producing a foamed PLA resin substantially free of volatile components.

"Substantially free of" refers to a state in which a substance is present below the limit of detection (LOD). Specifically, a proportion of the volatile components to the entire mass of the PLA resin composition is 0.0001 percent by mass at maximum.

Preferably, no organic compound with a boiling point of from -20 to below 150 degrees C at 1 atm is detected in the foamed PLA resin of the present disclosure as measured by gas chromatography in the following manner.

The volatile component in the foamed PLA resin can be measured in the following manner.

The foamed sheet is partially used as a measuring sample. Two parts by mass of 2-propanol is added to one part by mass of the sample followed by ultrasonic wave dispersion for 30 minutes. The dispersion obtained is stored in a refrigerator at 5 degrees C for at least one day to prepare the extract of the volatile component. The extract is analyzed utilizing gas chromatography (GC-14A, available from Shimadzu Corporation) to quantify the volatile components in the foamed PLA resin. The measuring method is as follows.

Measuring Conditions

· Gas chromatography (GC) device: GC-14A, available from Shimadzu Corporation
· Column: CBP20-M50-0.25, available from Shimadzu GLC Ltd.
· Detector: FID
· Amount of infusion: 1 to 5 $\mu$L
· Carrier gas: He 2.5 kg/cm$^2$
· Flow rate of hydrogen: 0.6 kg/cm$^2$
· Flow rate of air: 0.5 kg/cm$^2$
· Chart speed: 5mm/min
· Sensitivity: Range 101 $\times$ Atten 20
· Column temperature: 40 degrees C
· Injection Temperature: 150 degrees C

One way of keeping the organic compound mentioned above in the foamed PLA resin below LOD as measured by GC as described above, is to use a non-organic component, e.g., carbon dioxide, as a foaming agent. The content of the volatile component can be substantially 0 percent by mass by this method. A foamed PLA resin with no organic compound mentioned above detected can be handled with safety without producing odors.

Method of Manufacturing Foamed PLA Resin

The method of the present disclosure of the manufacturing foamed PLA resin is the same as the method of manufacturing the foamed PLA resin of the present disclosure. The method includes: melting the PLA resin in a temperature range of from the melting point of the PLA resin to the melting point + 40 degrees C, which is also referred to as melting process; adding and dissolving a compressive fluid as a foaming agent in the PLA resin composition, which is also referred to as a compressive fluid supplying process; extrusion expanding the PLA resin composition in a temperature range of from the melting point of the PLA resin - 60 degrees C to the melting point + 120 degrees C, which is also referred to as expansion process; and other optional processes.

Melting

The melting process melts the PLA resin composition in a temperature range of from the melting point of the PLA resin to the melting point + 40 degrees C.
In the melting process, the PLA resin composition is melted by heating.
The melting process in the method of manufacturing the foamed PLA resin can be carried out in the same manner as the raw materials mixing in the method of manufacturing the PLA resin composition. Therefore, in the melting process, the raw materials of the PLA resin composition may be mixed and melted.
The heating temperature in the melting process is, not particularly limited and can be suitably selected to suit to a particular application as long as the PLA resin composition is melted at the heating temperature. This heating temperature is preferably at least the temperature below which the PLA resin is not melted. The PLA resin composition can be melted by setting the heating temperature in the melting process to the temperature below which the PLA resin is not melted. Mixing the PLA resin composition uniformly with a compressive fluid is thus possible in the subsequent compressive fluid supplying process.
In the melting step, it is preferable that other components such as a foaming nucleating agent, the cross-linking agent, and the additive be added to the PLA resin composition, followed by melt-mixing.
The same cross-linking agent and additives as those for PLA resin composition mentioned above can be used. The descriptions thereof are thus omitted.

Nucleating Agent for Foaming Agent

The foaming nucleating agent, also referred to as "filler", is preferable to adjust the bubble diameter and the number density of the foamed PLA resin.
These nucleating agent for foaming is not particularly limited and can be suitably selected to suit to a particular application. Specific examples include, but are not limited to, organic nucleating agent for foaming and inorganic nucleating agent for foaming. These can be used alone or in combination.
Specific examples of the inorganic nucleating agent include, but are not limited to, talc, kaolin, calcium carbonate, layered silicate, zinc carbonate, wollastonite, silica, alumina, magnesium oxide, titanium oxide, calcium silicate, sodium aluminate, calcium aluminate, sodium aluminosilicate, magnesium silicate, glass balloon, carbon black, zinc oxide, antimony trioxide, zeolite, hydrotalcite, metal fiber, metal whisker, ceramic whisker, potassium titanate, boron nitride, graphite, glass fiber, and carbon fiber. These can be used alone or in combination. Of these, silica, titanium oxide, and laminar silicate are preferable for efficient dispersion, decreasing the amount added and reducing the environmental burden.

Specific examples of the organic nucleating agent include, but are not limited to, natural polymers such as starch, cellulose nano fiber, cellulose fine particles, wood flour, bean curd refuse, chaff, and bran, modified products thereof, glycerin compounds, sorbitol compounds, benzoic acid, and their metal salts, metal salts of phosphoric acid esters, and rosin compounds. These can be used alone or in combination.

The number-average particle diameter of the foam nucleating agent is not particularly limited and can be suitably selected to suit to a particular application. The number average particle diameter of the length along the minor axis is preferably 100 or less nm to increase the surface area per amount of addition and decrease the amount added.

There is no specific limit to the content of the nucleating agent for foaming mentioned above, and can be suitably selected to suit to a particular application. It is preferably from 3 or less percent by mass to the entire mass of the raw material of the foamed PLA resin. A content of the nucleating agent for foaming of 3 or less percent by mass stiffens the foamed PLA resin, preventing the resin from becoming brittle. The less the content of a low biodegradable nucleating agent, the more preferable. For this reason, the content of the foaming nucleating agent is more preferably 1 or less percent by mass to the entire mass of the raw materials of the foamed PLA resin.

The content of the organic nucleating agent for foaming can be determined by gas chromatography mass spectrometry (GC-MS) under the following measurement conditions.

Measurement Conditions

- GC-MS instrument: GC-MS QP-2010, available from Shimadzu Corporation, accessory Py3030D, available from Frontier Laboratories Ltd.
- Separation column: Ultra ALLOY UA5-30M-0.25F, available from Frontier Laboratories Ltd.
- Heating temperature of sample: 300 degrees C
- Column oven temperature: held at 50 degrees C for 1 minute, then heated (15 degrees C/minute) to 320 degrees C (held for 6 minutes)
- Ionization method: Electron Ionization (E.I method)
- Mass detection range: 25 to 700 (m/z)

The content of the inorganic nucleating agent for foaming can be determined by, for example, a method in accordance with JIS K 7250-1:2006 (Plastics-Determination of ash-Part 1: General Methods).

Compressive Fluid Supplying

In the compressive fluid supplying process, the compressive fluid mentioned above is added to and dissolved in the PLA resin composition. The compressive fluid dissolved plasticizes the PLA resin composition melted in the melting process, uniformly dispersing other components such as the cross-linking agent in the PLA resin composition. A compressive fluid acting as the same foaming agent as mentioned above is preferable to carry out kneading the foaming agent in the melting process and foaming with the foaming agent in the foaming process as a series of processes, reducing the environmental burden.

The compressive fluid supplying in the method of manufacturing the foamed PLA resin can be carried out in the same manner as the polymerization in the method of manufacturing the PLA resin composition. The compressive fluid may be thus supplied to the raw materials of the PLA resin composition.

A compressive fluid is known to plasticize resin, lowering the melt viscosity of the resin (Latest Application Technology on Super Critical Fluid, published by NTS Inc.). However, in the compressive fluid supplying, a PLA resin composition with a high melt viscosity is preferable to finely cut agglomerates by applying high shearing stress to other components such as the cross-linking agent mentioned above, resulting in good dispersion.

Therefore, a decrease in the melt viscosity of the PLA resin composition due to the impregnation of a compressive fluid is inconsistent with the enhancement of the kneading properties. In kneading with a nucleating agent for foaming, pressure is applied without using a compressive fluid in some cases. Such kneading aims to increase the viscosity by diminishing the resin's free volume and increasing the interaction between the resin particles (refer to k.Yang.R.Ozisik R.Polymer, 47.2849 (2006)).

On this issue, the inventors of the present invention have investigated the possibility of using a compressive fluid in kneading the PLA resin composition with the other components, such as a cross-linking agent, and found that, under the presence of a compressive fluid, the viscosity of the PLA resin becomes suitable for kneading in a temperature range of the melting point minus 60 degrees C to the melting point plus 120 degrees C so that the other components such as the cross-linking agent are uniformly dispersed. According to the present disclosure, a PLA composition in a highly sticky state can be kneaded at temperatures lower than its melting point because of a compressive fluid, which enhances the dispersibility of the other components such as a cross-linking agent.

Some types of compressive fluids can act as foaming agents. The inventors of the present invention have found that a compressive fluid such as carbon dioxide or nitrogen can be a substitute for a typical foaming agent in producing a PLA resin foam made of the PLA resin composition. A compressive fluid acting as a foaming agent is preferable to carry out kneading and foaming as a series of processes, reducing the environmental burden.

As described above, a foamed PLA resin substantially without a volatile component is preferable and a foamed PLA resin substantially without an organic compound having a boiling point of from -20 to lower than 150 degrees C is more preferable. The term "substantially without" means the term "substantially free" as described in the section of Volatile Component above. A foamed PLA resin formed by using a compressive fluid such as carbon dioxide and nitrogen acting as a foaming agent instead of a volatile foaming agent is odorless and can be handled with safety.

Kneading devices, or kneaders, for use in manufacturing a foamed PLA resin may employ a continuous or batch process. Preferably, the process is chosen considering the device efficiency, product features, and product quality.

The kneading device can be and is preferably the same as the polymerization device for use in manufacturing the PLA resin composition to support viscosity suitable for kneading.

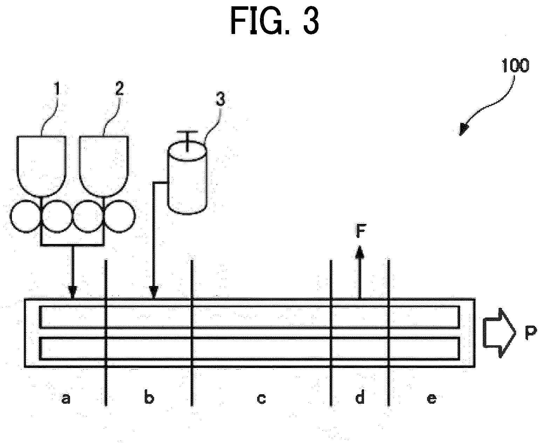

FIG. 3 is a diagram illustrating an example of the kneading device. A continuous kneading device 100 illustrated in FIG. 3 can be a twin-screw extruder, available from The Japan Steel Works, Ltd. It may have a screw caliber of 42 mm and LID of 48, for example. In the present embodiment, a first supplying unit 1 and a second supplying unit 2 supply raw materials such as PLA resin composition, a cross-linking agent and other optional components to a raw materials mixing and melting area a, followed by mixing and melting. A compressive fluid supplying unit 3 supplies compressive fluid F to the raw materials mixed and melted at a compressive fluid supplying area b. The resulting substance is kneaded at a kneading area c. The kneaded substance is purged of the compressive fluid F at a compressive fluid removing area d, and molded into a substance such as a pellet P at a mold-processing area e. A master batch as a composition precursor can be prepared in this manner.

The compressive fluid (liquid material) F is supplied with an instrument such as a metering pump. Solid raw materials, including other optional components such as a resin pellet and a cross-linking agent, are supplied with an instrument such as a metering feeder.

Raw Materials Mixing and Melting Area

The raw materials mixing and melting area a heats pellets of the PLA resin composition and mixes the pellets with other components such as a cross-linking agent followed by heating. The heating temperature at the raw materials mixing and melting area a is set to the melting point or higher of the PLA resin to prepare a mixture that can be uniformly mixed with a compressive fluid at the compressive fluid supplying area b.

Compressive Fluid Supplying Area

The resin pellets are melted and fused by heating to wet the other optional components such as the cross-linking agent, to which a compressible fluid is supplied to plasticize the molten resin.

Kneading Area

The temperature of the kneading area c is adjusted to achieve a suitable viscosity for kneading the PLA resin composition. This temperature is not particularly limited because it varies depending on factors such as the specifications of a reaction device and the type, structure, and molecular weight of a resin.

For procurable PLA resin with a weight average molecular weight Mw of about 180,000, kneading is typically conducted at a temperature range of from the melting point of PLA + 10 degrees C to that + 20 degrees C.

On the other hand, in the present disclosure, PLA resin can be kneaded at temperatures lower than the melting point of the PLA resin at a relatively high viscosity at the temperatures. Specifically, it is from the melting point - 80 degrees C to the point - 20 degrees and more preferably from the melting point - 60 degrees C to the point - 30 degrees C. The temperature setting can be simplified by using a factor such as the current value of the stirring force of a device. Unlike the present disclosure, setting such a heating temperature range is not conceivable for a classical method.

Foaming

The foaming process executes extrusion expanding in a temperature range of from the melting point of the PLA resin - 60 degrees C to the melting point + 120 degrees C.

The foaming process is carried out by removing the compressive fluid and expanding the PLA resin composition.

The compressive fluid can be removed by releasing pressure. The temperature during foaming is preferably set the melting point or higher of a PLA resin.

These kneading (compressive fluid supplying) and foaming can be executed simultaneously or separately.

In the foaming, compressive fluid dissolved in a PLA resin composition mainly forms a foaming nucleus from a small amount of crystals produced in the kneading area c against the treatment such as reduced pressure or heating that lowers the solubility of the compressive fluid, resulting in supersaturation. The diffusion of the compressive fluid dissolved in the PLA resin composition promotes the foaming nucleus to grow into bubbles, leading to foamed PLA resin with uniform and fine foaming.

Other Optional Process

The other optional processes are not particularly limited and can be suitably selected to suit to a particular application as long as it is typically conducted for manufacturing a foamed resin. It includes molding into a sheet.

This molding includes, but is not limited to, vacuum molding, pressure molding, and press molding. In the molding process, a sheet product (foamed sheet) is obtained.

Device for Manufacturing Foamed PLA Resin

Next, a method of manufacturing a foamed resin with a device for manufacturing the foamed PLA resin is described below. One example of the device for manufacturing a foamed resin is the kneading device (polymerization device) mentioned above. The kneading device and the device for manufacturing a foamed resin can be integrated or separated.

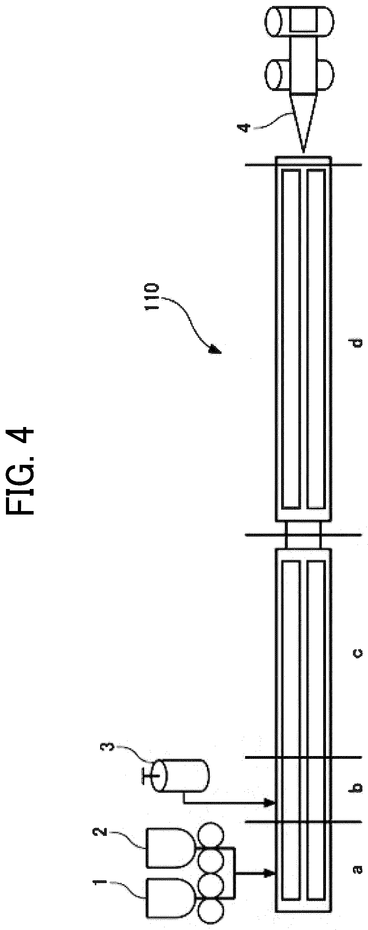

FIG. 4 is a diagram illustrating an example of the device for manufacturing a foamed resin. Like the kneading device, a device 110 for continuously manufacturing foamed resin can be, for example, a twin-screw extruder as described above. In the device 110 for continuously manufacturing foamed resin, the first supplying unit 1 and the second supplying unit 2 supply, a master batch, raw materials such as PLA resin composition and a cross-linking agent to the raw materials mixing and melting area a, followed by mixing and melting. The compressive fluid supplying unit 3 then supplies a compressive fluid to the mixed and melted raw materials at the compressive fluid supplying area b.

Next, the resulting substance is kneaded at the kneading area c to obtain a PLA resin composition. The PLA resin composition is supplied to the heating area d, where the composition is heated and kneaded. Thereafter, the kneaded matter can be open to the atmosphere for extrusion expanding. A foamed PLA resin 4 extrusion expanded is reeled up along a mandrel.

In the device 110 for continuously manufacturing foamed resin, the raw material mixing and melting area a, the compressive fluid supplying area b, and the kneading area c are also referred to as a first extruder. The heating area d is also referred to as a second extruder. In this embodiment, the raw materials obtained by mixing, melting, and kneading are extruded by the first extruder to the second extruder, where a sheet-like foamed PLA resin is extruded and expanded. One example of the second extruder is a circular die.

In this embodiment, the kneading device and the first extruder of the device for forming a foamed resin carry out the kneading process and the second extruder of the device for forming a foamed resin conducts the foaming process described later. This configuration is not limiting the present disclosure. Areas for kneading and foaming can be changed.

The PLA resin composition of the present disclosure and the foamed PLA resin can be used as it is or as manufactured matter. The foamed PLA resin of the present disclosure is excellent about lightweight properties and heat resistance. It can be used as a food container and shock-absorbing sheet. It can also be used as a heat-proof food container but is not limited thereto. Text and images can be printed on the foamed PLA resin of the present disclosure. The foamed PLA resin with such printing can be used as is.

Manufactured Matter

In one embodiment of the product of the present disclosure, the foamed PLA resin of the present disclosure is included. This product can be manufactured from the foamed PLA resin of the present disclosure. Alternatively, the product may optionally contain other components.

The product of the present disclosure in another embodiment is processed (for example, molded) from the foamed PLA resin of the present disclosure and may optionally contain other components.

The other components are not particularly limited as long as they are used in typical resin products and can be selected to suit to a particular application.

Processing the foamed PLA resin is not particularly limited. For example, the resin can be used in processing with a mold to obtain a product. The processing with a mold is not particularly limited. Traditional methods for thermoplastic resin can be applied, including vacuum molding, pressure forming, vacuum pressure forming, and press molding.

Examples of the product, also referred to as a "consumable material", include household goods such as bags, packaging containers, trays, tableware, cutlery, stationery, and cushioning materials. This product conceptually includes an intermediate product such as an original fabric with a roll-like form of the foamed PLA resin sheet, a part like the handle of a tray, and a product such as a tray with a handle, in addition to the product itself.

Specific examples of the bags include, but are not limited to, a shopping bag, a plastic carrier bag, and a garbage bag.

Specific examples of the stationery include, but are not limited to, a plastic transparent file folder and a patch.

In addition, the product can be widely used as a sheet or a packaging material for anything like industrial materials, daily commodities, agricultural commodities, foods, pharmaceuticals, and cosmetics, in addition to the consumable material mentioned above.

The method of producing a product obtained by molding the foamed PLA resin is not particularly limited as long as the foamed PLA resin of the present disclosure is used as a raw material. The method includes molding the foamed PLA resin of the present disclosure into a desired shape and other optional processes.

Some of the products may not maintain the shape and properties but are within the scope of the present invention as long as they use the foamed PLA resin as a raw material.

The terms of image forming, recording, and printing in the present disclosure represent the same meaning.

Also, recording media, media, and print substrates in the present disclosure have the same meaning unless otherwise specified.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Next, the present disclosure is described in detail with reference to Synthesis Examples, Examples, and Comparative Examples but is not limited thereto. In the following Synthesis Examples, Examples, and Comparative Examples, "parts" represents "parts by mass" and, "percent", "percent by mass", unless otherwise specified.

Synthesis Example 1: Synthesis of PLA Resin A-1

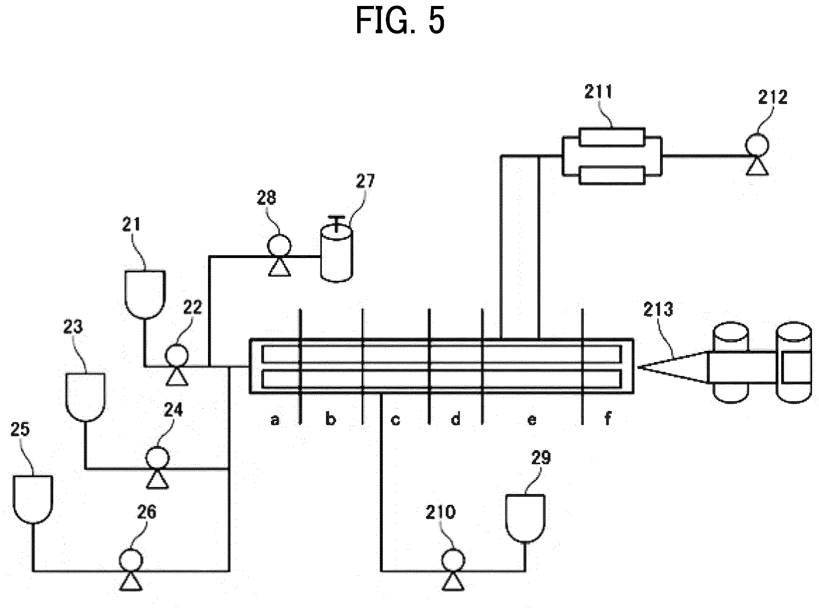

A PLA resin was manufactured with the device illustrated in FIG. 5. FIG. 5 is a diagram illustrating a continuous foaming device including a monomer tank 21, a monomer pump 22, a catalyst tank 23, a catalyst pump 24, an initiator tank 25, an initiator pump 26, a compressive fluid cylinder 27, a compressive fluid pump 28, an additive tank 29, an additive pump 210, a trap 211, a vacuum pump 212, and a twin screw roll 213.

The monomer pump 22 pumped L-lactide (available from PURAC JAPAN K.K.) as a monomer accommodated in the monomer tank 21 at a flow rate of 1 kg/hour, the initiator pump 26 supplied 1-hexanol (available from FUJIFILM Wako Pure Corporation) as an initiator accommodated in the initiator tank 25 at a flow rate of 0.01 g/hour, the catalyst pump 24 pumped 2-tin 2-octylate (available from FUJIFILM Wako Pure Corporation) as a catalyst accommodated in the catalytic tank 23 at a flow rate of 0.5 g/hour, the compressive fluid pump 28 pumped carbon dioxide gas (available from Showa Denko Gas Products Co., Ltd., purity of 99.999 percent) as a compressive fluid 1 from the compressive fluid cylinder 27 at a flow rate of 50 g/hour, and the additive pump 210 pumped methyltriethoxy silane (available from Shin-Etsu Chemical Co., Ltd.) as a metal oxide precursor accommodated in the additive tank 29 at a flow rate of 0.05 g/hour to conduct polymerization reaction for 60 minutes to obtain PLA Resin A-1.

The temperatures of the respective areas of the continuous foaming device illustrated in FIG. 5 were set to 170 degrees C for a raw material mixing area a, 170 degrees C for a prepolymerization area b, 90 degrees C for a nucleating agent growth area c, 180 degrees C for a polymerization area d, 185 degrees C for the demonomerization area e, and 180 degrees C for a resin extrusion area f. The pressures were set 10 MPa between the extruder inlet and the polymerization area d, 0.05 kPa for the demonomerization area e, and 5 MPa for a T-die.

Synthesis Examples 2 to 6: PLA Resin A-2 to A-6

PLA resins A-2 to A-6 were synthesized in the same manner as in the synthesis of PLA resin A-1 except that the flow rate of the initiator, the flow rate of the metallic catalyst, and the polymerization time were changed as shown in Table 1.

Measuring of Molecular Weight

The molecular weight of PLA resins A-1 to A-6 obtained in Synthesis Examples 1 to 6 was analyzed by gel chromatography (GPC) under the following analysis conditions.

Specifically, each PLA resin was dissolved in chloroform to achieve a concentration of 0.5 percent by mass, preparing a measuring sample. A total of 20 μL of the measuring sample was infused under the following measuring conditions. In addition, a simple dispersion polystyrene reference sample (available from TOSOH CORPORATION) was subjected to GPC in the same manner as above to create a molecular weight calibration curve in advance.

The number average molecular weight Mn and weight average molecular weight Mw of each PLA resin were calculated from the molecular weight distribution of PLA resin using the molecular weight calibration curve. The molecular weight distribution is a quotient obtained by dividing Mw by Mn. The results of the weight average molecular weight Mw were shown in Table 1.

Measuring Conditions

· Instrument: HLC-8320GPC, manufactured by TOSOH CORPORATION
· Column: TSKgel® SuperHZM-H (available from TOSOH CORPORATION)
· Temperature: 40 degrees C
· Solvent: Chloroform
· Amount of infusion: 20 μL
· Rate of flow: 0.6 mL/min.

Table 1

|  | Abbreviation | Weight average molecular weight Mw | Flow rate of initiator (g/hour) | Flow rate of catalyst (g/hour) | Polymerization time (minute) |
|---|---|---|---|---|---|
| PLA Resin A | A-1 | 260,000 | 0.010 | 0.5 | 60 |
|  | A-2 | 380,000 | 0.008 | 0.5 | 120 |
|  | A-3 | 450,000 | 0.006 | 0.5 | 90 |
|  | A-4 | 510,000 | 0.005 | 0.4 | 120 |
|  | A-5 | 570,000 | 0.004 | 0.5 | 90 |
|  | A-6 | 620,000 | 0.004 | 0.4 | 120 |

Example 1

Raw Materials Mixing and Melting

Using a device 110 for continuously manufacturing foamed resin illustrated in FIG. 4, PLA Resin A-4 at 50.00 percent by mass was mixed with PLA a-1 (Revode 190, melting point of 170 degrees C, weight average molecular weight Mw of 220,000, available from Zhejiang Hisun Biomaterials Co., Ltd.) at 50.00 percent by mass and the mixture was supplied from the first supplying unit 1 to the raw materials mixing and melting area a of the first extruder to achieve a flow rate of 10 kg/hour.

Compressive Fluid Supplying

Next, the compressive fluid supplying unit 3 supplied carbon dioxide as a compressive fluid at a flow rate of 0.99 kg/hour (equivalent to 10 percent by mass to PLA) to the compressive fluid supplying area b of the first extruder. The resulting mixture was mixed and meltkneaded at the kneading area c of the first extruder and then supplied to the second extruder.

Polymerization

Next, the second extruder kneaded the resulting matter at the heating area d at 170 degrees C to obtain a resin composition (PLA resin composition).

Foaming

The PLA resin composition obtained was discharged from a circular mold 4 with a slit aperture of 70 mm attached to the tip of the second extruder at a rate of discharging of 10 kg/hour. The PLA resin composition was then cooled down to 140 degrees C to purge the PLA resin composition of the compressive fluid, extrusion-expanding the PLA resin composition to obtain a cylindrical foamed PLA resin.
At this point, the temperature of the mold 4 was adjusted to 140 degrees C, while the pressure at the tip of the heating area d of the second extruder was adjusted to 30 MPa for the clearance for the tip of the flow path of the mold 4.

Molding

While the cylindrical foamed PLA resin extrusion-expanded was placed along a cooled mandrel, the exterior was cooling molded by blowing air from an air ring. The mold obtained was cut open with a cutter to obtain a foamed PLA resin flat sheet of Example 1.
In Example 1, the temperature conditions of each area were as follows.

· Raw materials mixing and melting area a of the first extruder: 190 degrees C
· Compressive fluid supplying area b of the first extruder: 190 degrees Celsius
· Kneading area c of the first extruder: 170 degrees C

The heating area d of the second extruder: 170 degrees C

Example 2

A foamed The PLA resin composition and foamed PLA resin sheet of Example 2 were obtained in the same manner as in Example 1 except that the raw materials mixing and melting process of Example 1 was changed to the following.

Raw Materials Mixing and Melting

Using a device 110 for continuously manufacturing foamed resin illustrated in FIG. 4, PLA Resin A-4 at 49.55 percent by mass was mixed with PLA a-1 (Revode 190, melting point of 170 degrees C, weight average molecular weight Mw of 220,000, available from Zhejiang Hisun Biomaterials Co., Ltd.) at 49.55 percent by mass and the mixture was supplied from the first supplying unit 1 to the raw materials mixing and melting area a of the first extruder to achieve a flow rate of 9.91 kg/hour.
Then the second supplying unit 2 supplied a glycidyl group-containing acrylic polymer, MARPTROOF™, G-0250DF, available from NOF CORPORATION) as Epoxy-based Cross-linking Agent B-1 to the raw materials mixing and melting area a of the first extruder at a flow rate of 0.09 kg/hr (corresponding to 0.90 percent by mass to the content of organic components).

Examples 3 to 5, 7, and 9 to 14

PLA resin compositions and foamed PLA resin sheets of Examples 3 to 5, 7, 9, and 10 to 14 were obtained in the same manner as in Example 1 except that the compositions and the mixing amounts of PLA Resin A and PLA Resin a were changed to those shown in Tables 2 to 4 below.

Examples 6 to 8, 18 to 20, 27 to 29, and 31

PLA resin compositions and foamed PLA resin sheets of Examples 6, 8, 18 to 20, 27 to 29, and 31 were obtained in the same manner as in Example 2 except that the compositions and the amounts of mixing of PLA Resin A, PLA Resin a, and Epoxy-based Cross-linking Agent B were changed to those shown in Tables 3, 5, and 7 below.

Examples 21 and 22

PLA resin compositions and foamed PLA resin sheets of Examples 21 and 22 were obtained in the same manner as in Example 2 except that Epoxy-based Cross-linking Agent B was changed to Isocyanate-based Cross-linking Agent C and the compositions and the amount of mixing of PLA Resin A, PLA Resin a, and Isocyanate-based Cross-linking Agent C were changed to those shown in Table 6 below.

Examples 23 and 24

PLA resin compositions and foamed PLA resin sheets of Examples 23 and 24 were obtained in the same manner as in Example 2 except that Epoxy-based Cross-linking Agent B was changed to Oxazoline-based Cross-linking Agent D and the compositions and the amount of mixing of PLA Resin A, PLA Resin a, and Oxazoline-based Cross-linking Agent D were changed to those shown in Table 6 below.

Examples 25 and 26

PLA resin compositions and foamed PLA resin sheets of Examples 25 and 26 were obtained in the same manner as in Example 2 except that Epoxy-based Cross-linking Agent B was changed to Carbodiimide-based Cross-linking Agent E and the compositions and the amount of mixing of PLA Resin A, PLA Resin a, and Carbodiimide-based Cross-linking Agent E were changed to those shown in Tables 6 and 7 below.

Example 15

A foamed The PLA resin composition and foamed PLA resin sheet of Example 15 was obtained in the same manner as in Example 1 except that the raw materials mixing and melting process of Example 1 was changed to the following.

Raw Materials Mixing and Melting

The device 110 for continuously manufacturing foamed resin illustrated in FIG. 4 mixed PLA Resin A-5 at 97.00 percent by mass with Cellulose Fiber F-1 (STARCEL™ T-NC-374, available from SEIKO PMC CORPORATION at 3.00 percent by mass and the first supplying unit 1 supplied the mixture to the raw materials mixing and melting area a of the first extruder to achieve a flow rate of 9.91 kg/hour.

Examples 16 and 17

PLA resin compositions and foamed PLA resin sheets of Examples 16 and 17 were obtained in the same manner as in Example 15 except that the type of Cellulose Fiber F was changed and the compositions and the amount of mixing of PLA Resin A, PLA Resin a, and Cellulose Fiber F were changed to those shown in Table 5 below.

Example 30

PLA resin compositions and foamed PLA resin sheets of Example 30 were obtained in the same manner as in Example 15 except that the compositions and the amount of mixing of PLA Resin A, PLA Resin a, and Cellulose Fiber F were changed to those shown in Table 7 below.

Comparative Examples 1 to 6

PLA resin compositions and foamed PLA resin sheets of Comparative Examples 1 to 6 were obtained in the same manner as in Example 1 except that PLA Resin A was not used and PLA Resin a shown in Tables 8 and 9 below was used alone.

Comparative Examples 7, 8, 11, 12, and 14

PLA resin compositions and foamed PLA resin sheets of Comparative Examples 7, 8, 11, 12, and 14 were obtained in the same manner as in Example 2 except that PLA Resin A was not used and the compositions and the amount of mixing of PLA Resin a and epoxy-based cross-linking agent B were changed to those shown in Tables 9 and 10 below.

Examples 9 and 13

PLA resin compositions and foamed PLA resin sheets of Comparative Examples 9 and 13 were obtained in the same manner as in Example 2 except that PLA Resin a was not used and the compositions and the amount of mixing of PLA Resin A and Epoxy-based Cross-linking Agent B were changed to those shown in Tables 9 and 10 below.
In Comparative Example 13, the melt viscosity was too high to produce the foamed PLA resin sheet.

Comparative Example 10

PLA resin compositions and foamed PLA resin sheets of Example 10 were obtained in the same manner as in Example 15 except that PLA Resin A was not used and the compositions and the mixing amounts of PLA Resin a and Cellulose Fiber F were changed to those shown in Table 9 below.
The proportions of PLA Resin A, PLA Resin a, Epoxy-based Cross-linking Agent B, Isocyanate-based Cross-linking Agent C, Oxazoline-based Cross-linking Agent D, Carbodiimide-based Cross-linking Agent E, and Cellulose Fiber F in the amount of the organic components were based on the prescriptions shown in Tables 2 to 10 below. These are calculated based on the proportions in the prepared materials.
The amount of the organic components refers to the total amount of PLA Resin A, PLA Resin a, Epoxy-based Cross-linking Agent B, Isocyanate-based Cross-linking Agent C, Oxazoline-based Cross-linking Agent D, Carbodiimide-based Cross-linking Agent E, and Cellulose Fiber F.

Evaluation on Property

The foamed PLA resin sheet obtained in Examples 1 to 31 and Comparative Examples 1 to 12 and 14 were evaluated regarding the weight average molecular weight Mw, molecular weight distribution Mw/Mn, the region of a weight average molecular weight Mw of 1,000 or less, the region of a weight average molecular weight Mw of 500,000 or higher, Ratio of L-form or D-form of PLA, melt viscosity (Pa·s), strain-hardening exponent, and expansion ratio in the following manner. For Comparative Example 13, foamed PLA resin was used in place of a foamed PLA resin sheet. Its weight average molecular weight Mw, molecular weight distribution Mw/Mn, the region of a weight average molecular weight Mw of 1,000 or less, the region of a weight average molecular weight Mw of 500,000 or higher, Ratio of L-form or D-form of PLA, melt viscosity (Pa·s), and strain-hardening exponent were evaluated in the following manner. The results are shown in Tables 2 to 10 below. In Tables 2 to 10 below, the items that were not possible to evaluate were represented by N.D.
Weight Average Molecular Weight Mw, Molecular Weight Distribution Mw/Mn, Region of Weight Average Molecular Weight Mw of 1,000 or less, Region of Weight Average Molecular Weight Mw of 500,000 or Higher
The molecular weight of each of the foamed PLA resin sheets obtained in Examples 1 to 31 and Comparative Examples 1 to 12 and 14 and the PLA resin composition obtained in Comparative Example 13 were analyzed by gel permeation chromatography (GPC) under the following analysis conditions.
Specifically, each of the Foamed PLA resin sheet or the PLA resin composition was dissolved in chloroform to achieve a concentration of 0.5 percent by mass, thus obtaining measurement samples. A total of 20 μL of the measuring sample was infused under the following measuring conditions. In addition, a simple dispersion polystyrene reference sample (available from TOSOH CORPORATION) was subjected to GPC in the same manner as above to create a molecular weight calibration curve in advance.
The Mn and Mw of the PLA resin and the regions (percent) of an Mw of 1,000 or less and an Mw of 500,000 or more were calculated from the molecular weight distribution of PLA resin using the molecular weight calibration curve mentioned above. The molecular weight distribution is a quotient obtained by dividing Mw by Mn. The results of the weight average molecular weight Mw were shown in Tables 2 to 10 below.

Measuring Conditions

· Instrument: HLC-8320 GPC, available from TOSOH CORPORATION
· Column: TSKgel® SuperHZM-H (available from TOSOH CORPORATION)
· Temperature: 40 degrees C
· Solvent: Chloroform
· Amount of infusion: 20 μL
· Rate of flow: 0.6 mL/min.

Ratio of L-form of PLA

The foamed PLA resin sheets of Example 1 to 31 and Comparative Examples 1 to 12 and 14 or the PLA resin composition obtained in Comparative Example 13 were frost-shattered. A total of 200 mg of each of the frost-shattered foamed PLA resin sheets or powdered PLA resin composition was weighed with a precision balance, followed by adding 30 mL of an aqueous solution of 1N sodium hydroxide. Next, the conical flask was shaken and heated to 65 degrees C to completely dissolve the PLA resin. Subsequently, the pH of the solution obtained was adjusted to 7 using 1 normal hydrochloric acid. The solution was diluted to a particular volume using a volumetric flask to obtain a PLA resin solution. The PLA resin solution was then filtered with a 0.45 $\mu$m membrane filter, followed by liquid chromatography analysis in the following measuring conditions.

The peak area derived from the D-form of lactic acid and the peak area derived from the L-form of lactic acid were obtained from the chart obtained, and the sum of both peak areas is calculated. Based on these values, the peak area ratios derived from the D-form of lactic acid and the peak area ratio derived from the L-form of lactic acid were then calculated. These results were used as the presence ratio to calculate the content ratios of D-form and L-form. This operation mentioned above was repeated three times and their results were arithmetically averaged. The average obtained was determined as the amount of D-form or L-form of lactic acid in the PLA resin in the foamed PLA resin sheet or the PLA resin composition. The results are shown as Ratio of L form in Tabled 2 to 10 below.

Measuring Conditions

HPLC device (liquid chromatograph): PU-2085 Plus system, available from JASCO Corporation
· Column: Chromolith® coated with SUMICHIRAL OA-5000 with an internal diameter of 4.6 mm and a length of 250 mm, available from Sumika Chemical Analysis Service, Ltd.
· Column temperature: 25 degrees Celsius
· Mobile phase: Liquid mixture of aqueous solution of 2 mM $CuSO_4$ with 2-propanol at a volume ratio of 95:5
· Rate of flow of mobile phase: 1.0 mL/minute
· Detector: UV 254 nm
· Infusing amount: 20 $\mu$L

Melt Viscosity

The foamed PLA resin sheets of Example 1 to 31 and Comparative Examples 1 to 12 and 14 or the PLA resin composition obtained in Comparative Example 13 were dried at 80 degrees C for two or more hours. The melt viscosity of the dried foamed PLA resin sheets or PLA resin composition were measured with a flow tester under the following measuring conditions.

Measuring Conditions

· Flow tester: CFT-100D, available from Shimadzu Corporation
· Test temperature: 190 degrees Celsius
· Measuring mode: constant temperature method
· Nozzle dimension: diameter of 1 mm with length of 10 mm

Strain-hardening Exponent

The foamed PLA resin sheets of Example 1 to 31 and Comparative Examples 1 to 12 and 14 or the PLA resin composition obtained in Comparative Example 13 were dried at 80 degrees C for two or more hours. The strain-hardening exponent of the dried foamed PLA resin sheets or PLA resin composition were measured with a rheometer under the following measuring conditions.

Measuring Conditions

· Measuring device: ARES-G2 (available from TA Instruments)
· Measuring jig: Elongation viscosity fixture (EVF), available from TA
· Measuring condition: The target foamed PLA resin sheets and PLA resin composition were measured at a temperature range of at least 10 to 50 degrees C higher than the melting point obtained by differential scanning calorimetry (DSC) and at a strain velocity of at least 1.0 $s^{-1}$, followed by calculating the strain-hardening exponent represented by Relationship 1 in the double logarithmic plot curve of [(time) - (uniaxial elongational viscosity)].

$$\text{Strain-hardening exponent} = a2/a1 \qquad \text{Relationship 1}$$

In Relationship 1, a1 represents the gradient in the linear region in the double logarithmic plot curve of [(time) - (uniaxial elongational viscosity)] and a2 represents the gradient in the non-linear region in the double logarithmic plot curve of [(time) - (uniaxial elongational viscosity)].

a1 above is obtained in the following manner instead of the simple method.

Specifically, using ARES-G2 (available from TA Instruments) and a 25 mm parallel plate as a measuring jig, the frequency dependency data of shearing viscosity in a frequency range of 0.1 to 100 rad/s were obtained under the conditions of a strain = 10 percent, temperature = same temperature as that of uniaxial elongational viscosity, and GAP = 0.7 to 1.5 mm. The three-time values of 3 ηs of the obtained shearing viscosity were plotted in the double logarithmic plot curve of [(time) - (uniaxial elongational viscosity)], and the gradient of this plot line was defined as gradient a1 of the linear region in the double logarithmic plot curve of [(time) - (uniaxial elongational viscosity)].

Expansion Ratio

The true specific gravity of the PLA resin composition obtained in the polymerization before expansion and the apparent specific gravity of the foamed PLA resin sheet obtained in the molding were measured with a buoyant gravimeter (Electronic densimeter, MD-300S, available from AlfaMirage Co., Ltd.). The expansion ratio of the foamed PLA resin sheets of Example 1 to 31 and Comparative Examples 1 to 12 and 14 were calculated according to the Relationships 2 and 3 below.

$$\text{Sample density (g/cm}^3) = \{(\text{weight (g) in atmosphere})/ (\text{weight (g) in atmosphere} - \text{weight (g) in water})\} \times \{\text{density (g/cm}^3) \text{ of water} - \text{density of air (g/cm}^3)\} + \text{density of air (g/cm}^3)$$

Relationship 2

$$\text{Sample Expansion ratio (factor)} = \text{True density (g/cm}^3) \text{ of resin} / \text{sample density (g/cm}^3)$$

Relationship 3

In the Relationships 2 and 3, the term "sample density (g/cm$^3$)" represents the apparent specific gravity of the foamed PLA resin sheet and the term "true density of resin (g/cm$^3$)" represents true specific gravity of the PLA resin composition before expansion.

Evaluation

The foamed PLA resin sheets of Example 1 to 31 and Comparative Examples 1 to 12 and 14 were evaluated regarding the strength, change in appearance before and after heating (degree of flatness), change in appearance before and after heating (droop), biodegradability, recyclability, and amount of volatile component in the following manner. As described above, since no foamed PLA resin sheet was produced in Comparative Example 13, the biodegradability, recyclability, and amount of volatile component of the PLA resin composition obtained in Comparative Example 13 were evaluated. The results are shown in Tables 2 to 10 below. In Tables 2 to 10 below, the items that were not possible to evaluate were represented by N.D.

Strength

The foamed PLA resin sheets of Example 1 to 31 and Comparative Examples 1 to 12 and 14 were measured at 120 degrees C regarding the tensile strength according to JISK 6767:1999 format (Cellular plastics -- Polyethylene -- Methods of test. The strength of each of the foamed PLA resin sheets compared with that of a non-expanded sheet (sheet from a PLA resin composition) was evaluated according to the following evaluation criteria.

The unexpanded sheet was prepared by pressing the PLA resin compositions manufactured in the polymerization of Example 1 to 31 and Comparative Examples 1 to 12 and 14 with a pressing machine heated to 190 degrees C. The measuring results of the non-expanded sheets were 55 MPa.

Evaluation Criteria

S: Tension strength of 60 or higher percent to that of non-expanded sheet
A: Tension strength of 40 to less than 60 percent to that of non-expanded sheet
C: Tension strength of less than 40 percent to that of non-expanded sheet

Change in Appearance Before and After Heating (Degree of Flatness)

The change in appearance before and after heating (degree of flatness) was evaluated in the following manner.

The foamed PLA resin sheets of Example 1 to 31 and Comparative Examples 1 to 12 and 14 were left to rest at 23 degrees C at a relative humidity of 50 percent for 24 hours. Several parts each with the top and bottom surfaces in parallel were cut out to a square of a length of 15 cm and a width of 15 cm as measuring samples. Experts made a visual inspection on the appearance (flatness) of the samples before heating.

Next, the measuring samples were stored for 90 minutes in an environment in which the temperature was adjusted to 90 $\pm$ 2 degrees C with a heated wind circulation drier (DN-400, available from Yamato Scientific Co., Ltd.) with the measuring samples not in contact with each other. Thereafter, the samples were left to rest at 23 degrees C and at a relative humidity of 50 percent for one hour. The experts made a visual inspection for the samples after heating and evaluated them according to the following evaluation criteria.

Evaluation Criteria

S: Foamed PLA resin sheet after heating and storing was still flat
A: Slight warp at end of foamed PLA resin sheet after heating and storing
C: Not flat, waving and warping significantly seen for foamed PLA resin sheet after heating and storing

Change in Appearance Before and After Heating (Droop)

The change in appearance before and after heating (droop) was evaluated in the following manner.

The foamed PLA resin sheets of Example 1 to 31 and Comparative Examples 1 to 12 and 14 were left to rest at 23 degrees C at a relative humidity of 50 percent for 24 hours. Two pieces each with the top and bottom surfaces in parallel were cut out to a square of a length of 15 cm and a width of 15 cm to obtain measuring samples. These two measuring samples were stored at a cuboid-like board for 90 minutes in an environment in which the temperature was adjusted to 90 $\pm$ 2 degrees C with a heated wind circulation drier (DN-400, available from Yamato Scientific Co., Ltd.) with one sample protruding from the board with an amount of 5 cm $\times$ 15 cm along the length direction, the rest protruding from the board with an amount of 5 cm $\times$ 15 cm along the width direction. Thereafter, the two samples were left to rest at the board at 23 degrees C at a relative humidity of 50 percent for one hour. The droop from the end of the board of the two was then analyzed.

If it was not possible to cut a 15 cm square measuring sample from the foamed PLA resin sheet, the two maximum squares were cut out and placed on the board, protruding from the board with one third of the square along the length direction or width direction, followed by heating and storing. The droop was observed in the same manner and evaluated according to the following evaluation criteria.

Evaluation Criteria

S: Droops of two measuring samples less than 2 degrees

A: Droops of two measuring samples at 2 to less than 5 degrees
C: At least one of droops of two measuring samples at least 5 degrees

Biodegradability

The biodefradability of the foamed PLA resin sheets of Example 1 to 31 and Comparative Examples 1 to 12 and 14 or the PLA resin composition obtained in Comparative Example 13 was obtained based on JISK 6953-2:2010 format (Determination of the ultimate aerobic biodegradability of plastic materials under controlled composting conditions-Method by analysis of evolved carbon dioxide-Part2: Gravimetric measurement of carbon dioxide evolved in a laboratory-scale test) and evaluated according to the evaluation criteria below.

Evaluation Criteria

S: Biodegraded at 60 or more percent in 45 days
A: Biodegraded 60 or more percent in six months
C: Biodegraded less than 60 percent in six months

Recyclability

Being made of a single material is most important for recyclability. A substance of a biodegradable PLA resin with non-degradable components is not preferable in terms of recyclability. The biodefradability of the foamed PLA resin sheets of Example 1 to 31 and Comparative Examples 1 to 12 and 14 or the PLA resin composition obtained in Comparative Example 13 was evaluated according to the evaluation criteria below.

Evaluation Criteria

S: 100 percent biodegradable organic compound
A: 99.0 to less than 100 percent biodegradable organic compound
C: Less than 99.0 percent biodegradable organic compound

Amount of Volatile Component

A 5mm (machine direction) and 5 mm (traverse direction) square cut out from each of the foamed PLA resin sheets of Example 1 to 31 and Comparative Examples 1 to 12 and 14 as a measuring sample. A total of 2 parts by mass of 2-propanol was added to 1 part by mass of the measuring sample followed by dispersion on ultrasonic wave for 30 minutes. The resulting matter was stored in a refrigerator at 5 degrees C for at least one day to obtain a 2-propanol extract of the volatile component. The 2-propanol extract of the volatile component was measured by gas chromatograph (GC-14A, available from Shimadzu Corporation) under the following conditions to quantify the volatile components in the foamed sheet.

Regarding the PLA resin composition obtained in Comparative Example 13, the PLA resin composition with the same mass as the 5 mm square cut out from the foamed PLA resin sheet was used as a measuring sample to quantify the volatile component of the PLA resin composition in the same manner as that for the foamed PLA resin sheet.

The measuring conditions are as follows. If the quantified volatile components are below the limit of detection (i.e., no volatile components is detected) in Tables 2 to 10 below, it is graded as A. If any of volatile components is detected, it is graded as C.

Measuring Conditions

· GC-14A, available from Shimadzu Corporation
· Column: CBP20-M50-025, available from Shimadzu GLC Ltd.
· Detector: FID
· Amount of infusion: 1 to 5 $\mu$L

· Carrier gas: He 2.5 kg/cm$^2$
· Flow rate of hydrogen: 0.6 kg/cm$^2$
· Flow rate of air: 0.5 kg/cm$^2$
· Chart speed: 5mm/min
· Sensitivity: Range 101 × Atten 20
· Column temperature: 40 degrees C
· Injection temperature: 150 degrees C

Table 2

| | Abbreviation | Example | | | | |
|---|---|---|---|---|---|---|
| | | 1 | 2 | 3 | 4 | 5 |
| PLA Resin A | A-1 | - | - | - | - | 100.00 |
| | A-2 | - | - | - | - | - |
| | A-3 | - | - | - | - | - |
| | A-4 | 50.00 | 49.55 | - | - | - |
| | A-5 | - | - | 40.00 | - | - |
| | A-6 | - | - | - | 30.00 | - |
| PLA Resin a | a-1 | 50.00 | 49.55 | - | - | - |
| | a-2 | - | - | - | - | - |
| | a-3 | - | - | - | - | - |
| | a-4 | - | - | - | - | - |
| | a-5 | - | - | - | 70.00 | - |
| | a-6 | - | - | 60.00 | - | - |
| | a-7 | - | - | - | - | - |
| Epoxy-based Cross-linking Agent B | B-1 | - | 0.90 | - | - | - |
| | B-2 | - | - | - | - | - |
| | B-3 | - | - | - | - | - |
| | B-4 | - | - | - | - | - |
| Isocyanate-based Cross-linking Agent C | C-1 | - | - | - | - | - |
| | C-2 | - | - | - | - | - |
| Oxazoline-based Cross-linking Agent D | D-1 | - | - | - | - | - |
| | D-2 | - | - | - | - | - |
| Carbodiimide-based Cross-linking Agent E | E-1 | - | - | - | - | - |
| | E-2 | - | - | - | - | - |
| Cellulose Fiber F | F-1 | - | - | - | - | - |
| | F-2 | - | - | - | - | - |
| | F-3 | - | - | - | - | - |
| Total (parts by mass) | | 100.00 | 100.00 | 100.00 | 100.00 | 100.00 |
| Properties of PLA resin | Melt viscosity (Pa·s) | 5,500 | 15,200 | 6,500 | 7,400 | 2,100 |
| | Weight average molecular weight Mw | 400,000 | 450,000 | 435,000 | 460,000 | 260,000 |
| | Molecular weight | 2.22 | 2.52 | 2.45 | 2.36 | 2.46 |

(continued)

| | Abbreviation | Example | | | | |
|---|---|---|---|---|---|---|
| | | 1 | 2 | 3 | 4 | 5 |
| | distribution Mv/Mn | | | | | |
| | Region (percent) where weight average molecular weight Mw is 1,000 or less | 1.5 | 6.0 | 1.0 | 0.9 | 3.0 |
| | Region (percent) where weight average molecular weight Mw is 500,000 or more | 78.0 | 76.0 | 74.0 | 72.0 | 65.0 |
| | Ratio (percent) of L-form | 99.0 | 99.0 | 98.5 | 98.1 | 99.7 |
| | Strain-hardening exponent | 5.0 | 15.0 | 8.0 | 9.0 | 2.5 |
| Properties of foamed PLA resin sheet | Expansion ratio (factor) | 20.1 | 19.9 | 20.5 | 23.5 | 18.5 |
| Evaluation on foamed PLA resin sheet | Strength | S | S | S | S | S |
| | Change in appearance before and after heating (degree of flatness) | S | S | S | S | S |
| | Change in appearance before and after heating (Droop) | S | S | S | S | S |
| | Biodegradability | S | S | S | S | S |
| | Recyclability | S | A | S | S | S |
| | Amount of volatile component | A | A | A | A | A |

Table 3

| | Abbreviation | Example | | | | |
|---|---|---|---|---|---|---|
| | | 6 | 7 | 8 | 9 | 10 |
| PLA Resin A | A-1 | 99.10 | - | - | 50.00 | - |
| | A-2 | - | 90.00 | - | - | 50.00 |
| | A-3 | - | - | 99.10 | - | - |
| | A-4 | - | - | - | 50.00 | - |
| | A-5 | - | - | - | - | - |
| | A-6 | - | - | - | - | - |
| PLA Resin a | a-1 | - | - | - | - | - |
| | a-2 | - | - | - | - | - |
| | a-3 | - | - | - | - | 50.00 |
| | a-4 | - | 10.00 | - | - | - |
| | a-5 | - | - | - | - | - |
| | a-6 | - | - | - | - | - |
| | a-7 | - | - | - | - | - |

(continued)

| | Abbreviation | Example | | | | |
|---|---|---|---|---|---|---|
| | | 6 | 7 | 8 | 9 | 10 |
| Epoxy-based Cross-linking Agent B | B-1 | - | - | 0.90 | - | - |
| | B-2 | 0.90 | - | - | - | - |
| | B-3 | - | - | - | - | - |
| | B-4 | - | - | - | - | - |
| Isocyanate-based Cross-linking Agent C | C-1 | - | - | - | - | - |
| | C-2 | - | - | - | - | - |
| Oxazoline-based Cross-linking Agent D | D-1 | - | - | - | - | - |
| | D-2 | - | - | - | - | - |
| Carbodiimide-based Cross-linking Agent E | E-1 | - | - | - | - | - |
| | E-2 | - | - | - | - | - |
| Cellulose Fiber F | F-1 | - | - | - | - | - |
| | F-2 | - | - | - | - | - |
| | F-3 | - | - | - | - | - |
| Total (parts by mass) | | 100.00 | 100.00 | 100.00 | 100.00 | 100.00 |
| Properties of PLA resin | Melt viscosity (Pa·s) | 2,800 | 3,800 | 10,100 | 4,400 | 4,900 |
| | Weight average molecular weight Mw | 316,000 | 364,000 | 471,000 | 345,000 | 364,000 |
| | Molecular weight distribution Mv/Mn | 2.29 | 2.34 | 2.19 | 2.51 | 2.53 |
| | Region (percent) where weight average molecular weight Mw is 1,000 or less | 5.5 | 1.6 | 5.0 | 1.8 | 1.9 |
| | Region (percent) where weight average molecular weight Mw is 500,000 or more | 69.0 | 71.0 | 77.0 | 67.0 | 68.0 |
| | Ratio (percent) of L-form | 99.6 | 99.7 | 99.7 | 99.8 | 98.8 |
| | Strain-hardening exponent | 10.0 | 4.0 | 22.0 | 3.5 | 4.0 |
| Properties of foamed PLA resin sheet | Expansion ratio (factor) | 20.7 | 20.5 | 22.2 | 23.7 | 25.5 |

(continued)

| | Abbreviation | Example | | | | |
|---|---|---|---|---|---|---|
| | | 6 | 7 | 8 | 9 | 10 |
| Evaluation on foamed PLA resin sheet | Strength | S | S | S | S | S |
| | Change in appearance before and after heating (degree of flatness) | S | S | S | S | S |
| | Change in appearance before and after heating (Droop) | S | S | S | S | S |
| | Biodegradability | S | S | S | S | S |
| | Recyclability | A | S | A | S | S |
| | Amount of volatile component | A | A | A | A | A |

Table 4

| | Abbreviation | Example | | | | |
|---|---|---|---|---|---|---|
| | | 11 | 12 | 13 | 14 | 15 |
| PLA Resin A | A-1 | - | - | - | - | - |
| | A-2 | - | - | - | - | - |
| | A-3 | 100.00 | - | - | - | - |
| | A-4 | - | 100.00 | - | - | - |
| | A-5 | - | - | 100.00 | - | 97.00 |
| | A-6 | - | - | - | 100.00 | - |
| PLA Resin a | a-1 | - | - | - | - | - |
| | a-2 | - | - | - | - | - |
| | a-3 | - | - | - | - | - |
| | a-4 | - | - | - | - | - |
| | a-5 | - | - | - | - | - |
| | a-6 | - | - | - | - | - |
| | a-7 | - | - | - | - | - |
| Epoxy-based Cross-linking Agent B | B-1 | - | - | - | - | - |
| | B-2 | - | - | - | - | - |
| | B-3 | - | - | - | - | - |
| | B-4 | - | - | - | - | - |
| Isocyanate-based Cross-linking Agent C | C-1 | - | - | - | - | - |
| | C-2 | - | - | - | - | - |
| Oxazoline-based Cross-linking Agent D | D-1 | - | - | - | - | - |
| | D-2 | - | - | - | - | - |
| Carbodiimide-based Cross-linking Agent E | E-1 | - | - | - | - | - |
| | E-2 | - | - | - | - | - |

(continued)

| | Abbreviation | Example | | | | |
|---|---|---|---|---|---|---|
| | | 11 | 12 | 13 | 14 | 15 |
| Cellulose Fiber F | F-1 | - | - | - | - | 3.00 |
| | F-2 | - | - | - | - | - |
| | F-3 | - | - | - | - | - |
| Total (parts by mass) | | 100.00 | 100.00 | 100.00 | 100.00 | 100.00 |
| Properties of PLA resin | Melt viscosity (Pa·s) | 7,500 | 11,500 | 17,600 | 25,100 | 18,200 |
| | Weight average molecular weight Mw | 448,000 | 507,000 | 567,000 | 608,000 | 560,000 |
| | Molecular weight distribution Mv/Mn | 2.36 | 2.45 | 2.64 | 2.69 | 2.61 |
| | Region (percent) where weight average molecular weight Mw is 1,000 or less | 1.5 | 1.2 | 1.1 | 1.6 | 7.0 |
| | Region (percent) where weight average molecular weight Mw is 500,000 or more | 84.0 | 92.0 | 94.0 | 96.0 | 90.0 |
| | Ratio (percent) of L-form | 99.7 | 99.7 | 99.8 | 99.7 | 99.6 |
| | Strain-hardening exponent | 8.0 | 12.0 | 17.0 | 21.0 | 17.0 |
| Properties of foamed PLA resin sheet | Expansion ratio (factor) | 20.5 | 18.4 | 17.6 | 16.6 | 19.3 |
| Evaluation on foamed PLA resin sheet | Strength | A | A | A | A | S |
| | Change in appearance before and after heating (degree of flatness) | S | S | S | S | S |
| | Change in appearance before and after heating (Droop) | S | S | S | S | S |
| | Biodegradability | S | S | S | S | S |
| | Recyclability | S | A | S | S | S |
| | Amount of volatile component | A | A | A | A | A |

Table 5

| | Abbreviation | Example | | | | |
|---|---|---|---|---|---|---|
| | | 16 | 17 | 18 | 19 | 20 |
| PLA Resin A | A-1 | - | - | - | - | - |
| | A-2 | - | - | - | - | - |
| | A-3 | - | 45.00 | 99.50 | - | - |
| | A-4 | 95.00 | - | - | - | - |
| | A-5 | - | - | - | - | 49.50 |
| | A-6 | - | - | - | 99.50 | - |
| PLA Resin a | a-1 | - | - | - | - | 50.00 |
| | a-2 | - | - | - | - | - |
| | a-3 | - | - | - | - | - |
| | a-4 | - | - | - | - | - |
| | a-5 | - | - | - | - | - |
| | a-6 | - | - | - | - | - |
| | a-7 | - | 53.00 | - | - | - |
| Epoxy-based Cross-linking Agent B | B-1 | - | - | - | - | - |
| | B-2 | - | - | 0.50 | - | - |
| | B-3 | - | - | - | 0.50 | - |
| | B-4 | - | - | - | - | 0.50 |
| Isocyanate-based Cross-linking Agent C | C-1 | - | - | - | - | - |
| | C-2 | - | - | - | - | - |
| Oxazoline-based Cross-linking Agent D | D-1 | - | - | - | - | - |
| | D-2 | - | - | - | - | - |
| Carbodiimide-based Cross-linking Agent E | E-1 | - | - | - | - | - |
| | E-2 | - | - | - | - | - |
| Cellulose Fiber F | F-1 | - | - | - | - | - |
| | F-2 | 5.00 | - | - | - | - |
| | F-3 | - | 2.00 | - | - | - |
| Total (parts by mass) | | 100.00 | 100.00 | 100.00 | 100.00 | 100.00 |
| Properties of PLA resin | Melt viscosity (Pa·s) | 12,000 | 7,700 | 20,600 | 39,000 | 18,700 |
| | Weight average molecular weight Mw | 503,000 | 448,000 | 510,000 | 680,000 | 475,000 |
| | Molecular weight | 2.58 | 2.55 | 2.61 | 2.54 | 2.44 |

(continued)

| | Abbreviation | Example | | | | |
|---|---|---|---|---|---|---|
| | | 16 | 17 | 18 | 19 | 20 |
| | distribution Mv/Mn | | | | | |
| | Region (percent) where weight average molecular weight Mw is 1,000 or less | 8.0 | 6.0 | 1.2 | 1.4 | 1.1 |
| | Region (percent) where weight average molecular weight Mw is 500,000 or more | 87.0 | 83.0 | 93.0 | 98.0 | 90.0 |
| | Ratio (percent) of L-form | 99.7 | 99.7 | 99.6 | 99.7 | 99.3 |
| | Strain-hardening exponent | 15.0 | 11.0 | 12.0 | 24.0 | 13.0 |
| Properties of foamed PLA resin sheet | Expansion ratio (factor) | 21.5 | 22.3 | 20.9 | 15.1 | 22.1 |
| Evaluation on foamed PLA resin sheet | Strength | S | S | S | A | A |
| | Change in appearance before and after heating (degree of flatness) | S | S | S | S | S |
| | Change in appearance before and after heating (Droop) | S | S | S | S | S |
| | Biodegradability | S | S | S | S | S |
| | Recyclability | S | S | A | A | A |
| | Amount of volatile component | A | A | A | A | A |

Table 6

| | Abbreviation | Example | | | | |
|---|---|---|---|---|---|---|
| | | 21 | 22 | 23 | 24 | 25 |
| PLA Resin A | A-1 | - | - | - | - | - |
| | A-2 | - | - | - | - | - |
| | A-3 | - | - | - | 50.00 | 50.00 |
| | A-4 | - | - | 50.00 | - | - |
| | A-5 | - | 50.00 | - | - | - |
| | A-6 | 40.00 | - | - | - | - |
| PLA Resin a | a-1 | 59.00 | - | - | - | - |
| | a-2 | - | 49.00 | - | - | - |
| | a-3 | - | - | 49.00 | - | - |
| | a-4 | - | - | - | 49.00 | - |
| | a-5 | - | - | - | - | 49.00 |
| | a-6 | - | - | - | - | - |
| | a-7 | - | - | - | - | - |

(continued)

| | Abbreviation | Example | | | | |
|---|---|---|---|---|---|---|
| | | 21 | 22 | 23 | 24 | 25 |
| Epoxy-based Cross-linking Agent B | B-1 | - | - | - | - | - |
| | B-2 | - | - | - | - | - |
| | B-3 | - | - | - | - | - |
| | B-4 | - | - | - | - | - |
| Isocyanate-based Cross-linking Agent C | C-1 | 1.00 | - | - | - | - |
| | C-2 | - | 1.00 | - | - | - |
| Oxazoline-based Cross-linking Agent D | D-1 | - | - | 1.00 | - | - |
| | D-2 | - | - | - | 1.00 | - |
| Carbodiimide-based Cross-linking Agent E | E-1 | - | - | - | - | 1.00 |
| | E-2 | - | - | - | - | - |
| Cellulose Fiber F | F-1 | - | - | - | - | - |
| | F-2 | - | - | - | - | - |
| | F-3 | - | - | - | - | - |
| Total (parts by mass) | | 100.00 | 100.00 | 100.00 | 100.00 | 100.00 |
| Properties of PLA resin | Melt viscosity (Pa·s) | 8,700 | 10,000 | 9,100 | 8,200 | 6,900 |
| | Weight average molecular weight Mw | 420,000 | 477,000 | 438,000 | 410,000 | 398,000 |
| | Molecular weight distribution Mv/Mn | 2.19 | 2.26 | 2.23 | 2.01 | 2.05 |
| | Region (percent) where weight average molecular weight Mw is 1,000 or less | 5.5 | 4.5 | 4.2 | 5.1 | 4.8 |
| | Region (percent) where weight average molecular weight Mw is 500,000 or more | 55.0 | 65.0 | 60.0 | 59.0 | 53.0 |
| | Ratio (percent) of L-form | 99.7 | 99.1 | 99.5 | 99.3 | 99.4 |
| | Strain-hardening exponent | 5.4 | 6.6 | 5.3 | 4.3 | 3.9 |
| Properties of foamed PLA resin sheet | Expansion ratio (factor) | 17.9 | 18.9 | 18.5 | 19.0 | 18.2 |

(continued)

| | Abbreviation | Example | | | | |
|---|---|---|---|---|---|---|
| | | 21 | 22 | 23 | 24 | 25 |
| Evaluation on foamed PLA resin sheet | Strength | S | S | S | S | S |
| | Change in appearance before and after heating (degree of flatness) | A | S | A | A | A |
| | Change in appearance before and after heating (Droop) | S | A | A | S | A |
| | Biodegradability | A | A | A | A | A |
| | Recyclability | A | A | A | A | A |
| | Amount of volatile component | A | A | A | A | A |

Table 7

| | Abbreviation | Example | | | | | |
|---|---|---|---|---|---|---|---|
| | | 26 | 27 | 28 | 29 | 30 | 31 |
| PLA Resin A | A-1 | - | - | - | - | 40.00 | 99.00 |
| | A-2 | - | - | - | - | - | - |
| | A-3 | 50.00 | 99.50 | 99.70 | 99.90 | 20.00 | - |
| | A-4 | - | - | - | - | - | - |
| | A-5 | - | - | - | - | 30.00 | - |
| | A-6 | - | - | - | - | - | - |
| PLA Resin a | a-1 | - | - | - | - | - | - |
| | a-2 | - | - | - | - | - | - |
| | a-3 | - | - | - | - | - | - |
| | a-4 | - | - | - | - | - | - |
| | a-5 | - | - | - | - | - | - |
| | a-6 | 49.00 | - | - | - | - | - |
| | a-7 | - | - | - | - | - | - |
| Epoxy-based Cross-linking Agent B | B-1 | - | 0.50 | 0.30 | 0.10 | - | 1.00 |
| | B-2 | - | - | - | - | - | - |
| | B-3 | - | - | - | - | - | - |
| | B-4 | - | - | - | - | - | - |
| Isocyanate-based Cross-linking Agent C | C-1 | - | - | - | - | - | - |
| | C-2 | - | - | - | - | - | - |
| Oxazoline-based Cross-linking Agent D | D-1 | - | - | - | - | - | - |
| | D-2 | - | - | - | - | - | - |

(continued)

| | Abbreviation | Example | | | | | |
|---|---|---|---|---|---|---|---|
| | | 26 | 27 | 28 | 29 | 30 | 31 |
| Carbodiimide-based Cross-linking Agent E | E-1 | - | - | - | - | - | - |
| | E-2 | 1.00 | - | - | - | - | - |
| Cellulose Fiber F | F-1 | - | - | - | - | 10.00 | |
| | F-2 | - | - | - | - | - | - |
| | F-3 | - | - | - | - | - | - |
| Total (parts by mass) | | 100.00 | 100.00 | 100.00 | 100.00 | 100.00 | 100.00 |
| Properties of PLA resin | Melt viscosity (Pa·s) | 7,200 | 12,400 | 11,200 | 10,400 | 8,300 | 2,100 |
| | Weight average molecular weight Mw | 401,000 | 520,000 | 501,000 | 478,000 | 415,000 | 282,000 |
| | Molecular weight distribution Mv/Mn | 2.19 | 2.75 | 2.46 | 2.22 | 2.55 | 2.05 |
| | Region (percent) where weight average molecular weight Mw is 1,000 or less | 4.7 | 5.5 | 5.0 | 4.3 | 8.9 | 2.2 |
| | Region (percent) where weight average molecular weight Mw is 500,000 or more | 58.0 | 79.0 | 77.0 | 75.0 | 62.0 | 21.0 |
| | Ratio (percent) of L-form | 99.6 | 99.7 | 99.7 | 99.7 | 99.7 | 99.7 |
| | Strain-hardening exponent | 4.1 | 6.8 | 6.3 | 6.2 | 5.4 | 3.3 |
| Properties of foamed PLA resin sheet | Expansion ratio (factor) | 20.6 | 20.8 | 18.1 | 17.7 | 22.4 | 15.1 |
| Evaluation on foamed PLA resin sheet | Strength | S | A | A | A | S | A |
| | Change in appearance before and after heating (degree of flatness) | A | S | A | A | A | A |
| | Change in appearance before and after heating (Droop) | S | A | A | A | S | A |
| | Biodegradability | A | A | A | A | S | A |
| | Recyclability | A | A | A | A | S | A |
| | Amount of volatile component | A | A | A | A | A | A |

Table 8

| | Abbreviation | Comparative Example | | | | |
|---|---|---|---|---|---|---|
| | | 1 | 2 | 3 | 4 | 5 |
| PLA Resin A | A-1 | - | - | - | - | - |
| | A-2 | - | - | - | - | - |
| | A-3 | - | - | - | - | - |
| | A-4 | - | - | - | - | - |
| | A-5 | - | - | - | - | - |
| | A-6 | - | - | - | - | - |
| PLA Resin a | a-1 | 100.00 | - | - | - | - |
| | a-2 | - | 100.00 | - | - | - |
| | a-3 | - | - | 100.00 | - | - |
| | a-4 | - | - | - | 100.00 | - |
| | a-5 | - | - | - | - | 100.00 |
| | a-6 | - | - | - | - | - |
| | a-7 | - | - | - | - | - |
| Epoxy-based Cross-linking Agent B | B-1 | - | - | - | - | - |
| | B-2 | - | - | - | - | - |
| | B-3 | - | - | - | - | - |
| | B-4 | - | - | - | - | - |
| Isocyanate-based Cross-linking Agent C | C-1 | - | - | - | - | - |
| | C-2 | - | - | - | - | - |
| Oxazoline-based Cross-linking Agent D | D-1 | - | - | - | - | - |
| | D-2 | - | - | - | - | - |
| Carbodiimide-based Cross-linking Agent E | E-1 | - | - | - | - | - |
| | E-2 | - | - | - | - | - |
| Cellulose Fiber F | F-1 | - | - | - | - | - |
| | F-2 | - | - | - | - | - |
| | F-3 | - | - | - | - | - |
| Total (parts by mass) | | 100.00 | 100.00 | 100.00 | 100.00 | 100.00 |
| Properties of PLA resin | Melt viscosity (Pa·s) | 1,800 | 1,700 | 1,900 | 1,650 | 1,700 |
| | Weight average molecular weight Mw | 219,000 | 218,000 | 220,000 | 218,000 | 217,000 |
| | Molecular weight | 1.61 | 1.82 | 1.51 | 1.77 | 1.54 |

(continued)

| | Abbreviation | Comparative Example | | | | |
|---|---|---|---|---|---|---|
| | | 1 | 2 | 3 | 4 | 5 |
| | distribution Mv/Mn | | | | | |
| | Region (percent) where weight average molecular weight Mw is 1,000 or less | 1.1 | 1.3 | 1.4 | 1.1 | 1.5 |
| | Region (percent) where weight average molecular weight Mw is 500,000 or more | 15.5 | 17.7 | 16.1 | 16.4 | 16.7 |
| | Ratio (percent) of L-form | 99.0 | 97.5 | 96.5 | 99.5 | 99.5 |
| | Strain-hardening exponent | 1.1 | 1.3 | 1.2 | 1.2 | 1.1 |
| Properties of foamed PLA resin sheet | Expansion ratio (factor) | 2.0 | 2.2 | 2.4 | 2.3 | 2.1 |
| Evaluation on foamed PLA resin sheet | Strength | C | C | C | C | C |
| | Change in appearance before and after heating (degree of flatness) | C | C | C | C | C |
| | Change in appearance before and after heating (Droop) | C | C | C | C | C |
| | Biodegradability | S | S | S | S | S |
| | Recyclability | S | S | S | S | S |
| | Amount of volatile component | A | A | A | A | A |

Table 9

| | Abbreviation | Comparative Example | | | | |
|---|---|---|---|---|---|---|
| | | 6 | 7 | 8 | 9 | 10 |
| PLA Resin A | A-1 | - | - | - | 90.00 | - |
| | A-2 | - | - | - | - | - |
| | A-3 | - | - | - | - | - |
| | A-4 | - | - | - | - | - |
| | A-5 | - | - | - | - | - |
| | A-6 | - | - | - | - | - |
| PLA Resin a | a-1 | - | - | 99.10 | - | - |
| | a-2 | - | - | - | - | 85.00 |
| | a-3 | - | - | - | - | - |
| | a-4 | - | - | - | - | - |
| | a-5 | - | - | - | - | - |
| | a-6 | 100.00 | - | - | - | - |
| | a-7 | - | 99.10 | - | - | - |

(continued)

| | Abbreviation | Comparative Example | | | | |
|---|---|---|---|---|---|---|
| | | 6 | 7 | 8 | 9 | 10 |
| Epoxy-based Cross-linking Agent B | B-1 | - | - | 0.90 | - | - |
| | B-2 | - | - | - | 10.00 | - |
| | B-3 | - | 0.90 | - | - | - |
| | B-4 | - | - | - | - | - |
| Isocyanate-based Cross-linking Agent C | C-1 | - | - | - | - | - |
| | C-2 | - | - | - | - | - |
| Oxazoline-based Cross-linking Agent D | D-1 | - | - | - | - | - |
| | D-2 | - | - | - | - | - |
| Carbodiimide-based Cross-linking Agent E | E-1 | - | - | - | - | - |
| | E-2 | - | - | - | - | - |
| Cellulose Fiber F | F-1 | - | - | - | - | 15.00 |
| | F-2 | - | - | - | - | - |
| | F-3 | - | - | - | - | - |
| Total (parts by mass) | | 100.00 | 100.00 | 100.00 | 100.00 | 100.00 |
| Properties of PLA resin | Melt viscosity (Pa·s) | 1,750 | 1,900 | 1,950 | 1,650 | 1,100 |
| | Weight average molecular weight Mw | 219,000 | 270,000 | 286,000 | 210,000 | 191,000 |
| | Molecular weight distribution Mv/Mn | 1.63 | 2.12 | 2.18 | 2.11 | 1.55 |
| | Region (percent) where weight average molecular weight Mw is 1,000 or less | 1.3 | 12.0 | 11.1 | 15.0 | 21.0 |
| | Region (percent) where weight average molecular weight Mw is 500,000 or more | 16.5 | 19.9 | 18.9 | 16.1 | 12.3 |
| | Ratio (percent) of L-form | 99.5 | 98.5 | 99.0 | 99.5 | 96.5 |
| | Strain-hardening exponent | 1.4 | 1.9 | 1.6 | 1.8 | 1.0 |
| Properties of foamed PLA resin sheet | Expansion ratio (factor) | 2.4 | 2.1 | 1.9 | 2.0 | 2.3 |

(continued)

| | Abbreviation | Comparative Example | | | | |
|---|---|---|---|---|---|---|
| | | 6 | 7 | 8 | 9 | 10 |
| Evaluation on foamed PLA resin sheet | Strength | C | C | C | C | C |
| | Change in appearance before and after heating (degree of flatness) | C | C | C | C | C |
| | Change in appearance before and after heating (Droop) | C | C | C | C | C |
| | Biodegradability | S | S | S | C | S |
| | Recyclability | S | A | A | C | S |
| | Amount of volatile component | A | A | A | A | A |

Table 10

| | Abbreviation | Comparative Example | | | |
|---|---|---|---|---|---|
| | | 11 | 12 | 13 | 14 |
| PLA Resin A | A-1 | - | - | - | - |
| | A-2 | - | - | - | - |
| | A-3 | - | - | - | - |
| | A-4 | - | - | - | - |
| | A-5 | - | - | - | - |
| | A-6 | - | - | 98.00 | - |
| PLA Resin a | a-1 | 98.00 | - | - | - |
| | a-2 | - | 99.50 | - | - |
| | a-3 | - | - | - | - |
| | a-4 | - | - | - | - |
| | a-5 | - | - | - | 99.90 |
| | a-6 | - | - | - | - |
| | a-7 | - | - | - | - |
| Epoxy-based Cross-linking Agent B | B-1 | 2.00 | - | - | 0.10 |
| | B-2 | - | - | 2.00 | - |
| | B-3 | - | 0.50 | - | - |
| | B-4 | - | - | - | - |
| Isocyanate-based Cross-linking Agent C | C-1 | - | - | - | - |
| | C-2 | - | - | - | - |
| Oxazoline-based Cross-linking Agent D | D-1 | - | - | - | - |
| | D-2 | - | - | - | - |
| Carbodiimide-based Cross-linking Agent E | E-1 | - | - | - | - |
| | E-2 | - | - | - | - |

(continued)

| | Abbreviation | Comparative Example | | | |
|---|---|---|---|---|---|
| | | 11 | 12 | 13 | 14 |
| Cellulose Fiber F | F-1 | - | - | - | - |
| | F-2 | - | - | - | - |
| | F-3 | - | - | - | - |
| Total (parts by mass) | | 100.00 | 100.00 | 100.00 | 100.00 |
| Properties of PLA resin | Melt viscosity (Pa·s) | 2,700 | 1,900 | 41,000 | 2,050 |
| | Weight average molecular weight Mw | 300,000 | 290,000 | 695,000 | 251,000 |
| | Molecular weight | 1.75 | 1.77 | 3.25 | 2.01 |
| | distribution Mv/Mn | | | | |
| | Region (percent) where weight average molecular weight Mw is 1,000 or less | 15.0 | 9.0 | 1.2 | 1.3 |
| | Region (percent) where weight average molecular weight Mw is 500,000 or more | 21.2 | 20.1 | 40.9 | 16.5 |
| | Ratio (percent) of L-form | 99.5 | 97.5 | 99.5 | 99.0 |
| | Strain-hardening exponent | 3.5 | 1.5 | 1.2 | 2.0 |
| Properties of foamed PLA resin sheet | Expansion ratio (factor) | 6.8 | 2.2 | N.D. | 2.3 |
| Evaluation on foamed PLA resin sheet | Strength | A | A | N.D. | C |
| | Change in appearance before and after heating (degree of flatness) | C | C | N.D. | C |
| | Change in appearance before and after heating (Droop) | C | C | N.D. | C |
| | Biodegradability | C | A | C | S |
| | Recyclability | C | A | C | S |
| | Amount of volatile component | A | A | A | A |

As seen in the results shown in Tables 2 to 10 above, foamed PLA resin sheets produced in Examples 1 to 31 demonstrate good biodegradability and excellent appearance and strength at high temperatures compared with those produced in Comparative Examples 1 to 14.

Each component in Examples 1 to 31 and Comparative Examples 1 to 14 in Tables 2 to 10 were detailed as shown in Tables 11 and 12 below.

Table 11

| | Abbreviation | Compound or structure | Manufacturer and product |
|---|---|---|---|
| PLA Resin A | A-1 | PLA | Synthetic product Mw:260,000 |
| | A-2 | | Synthetic product Mw:380,000 |
| | A-3 | | Synthetic product Mw:450,000 |
| | A-4 | | Synthetic product Mw:510,000 |
| | A-5 | | Synthetic product Mw:570,000 |
| | A-6 | | Synthetic product Mw:620,000 |
| PLA Resin a | a-1 | PLA | Revode190, available from Zhejiang Hisun Biomaterials Co., Ltd.: Mw: 220,000 |
| | a-2 | | Revode110, available from Zhejiang Hisun Biomaterials Co., Ltd.: Mw: 220,000 |
| | a-3 | | LX175, available from TotalEnergies Corbion: Mw: 220,000 |
| | a-4 | | L175, available from TotalEnergies Corbion: Mw: 220,000 |
| | a-5 | | FY801, available from ANHUI BBCA BIOCHEMICAL & FUTEPRO PLA Co., Ltd.: Mw: 220,000 |
| | a-6 | | 2500HP, available from NatureWorks LLC: Mw: 220,000 |
| | a-7 | | 4032D, available from NatureWorks LLC: Mw: 220,000 |

Table 12

| | Abbreviation | Compound or structure | Manufacturer and product |
|---|---|---|---|
| Epoxy-based Cross-linking Agent B | B-1 | Acrylic polymer having glycidyl group | MARPTROOF™, G-0250DF, available from NOF CORPORATION |
| | B-2 | | Joncryl ADR4468, available from BASF SE |
| | B-3 | | METABLEN™ P-1901, available from Mitsubishi Chemical Corporation |
| | B-4 | Cresol novolac polymer having epoxy group | EPICLON® N695, available from DIC Corporation |
| Isocyanate-based cross-linking agent C | C-1 | 1,5-Pentamethylene diisocyanulate | STABiO D370N, available from Mitsui Chemicals, Inc. |
| | C-2 | 1,6-Pentamethylene diisocyanulate | TAKENATE™ D-170HN, available from Mitsui Chemicals, Inc. |
| Oxazoline-based Cross-linking Agent D | D-1 | Polystyrene having oxazoline group | EPOCROS™ RPS-1005, available from NIPPON SHOKUBAI CO., LTD. |
| | D-2 | Polystyrene having oxazoline group | EPOCROS™ PX-3-RP-37, available from NIPPON SHOKUBAI CO., LTD. |
| Carbodiimide-based Cross-linking Agent E | E-1 | Polycarbodiimide | CARBODILITE™ HMW-5CA-LC, available from Nisshinbo Chemical Inc. |
| | E-2 | Cyclic carbodiimide | Carbosista®, available from TEIJIN LIMITED |

(continued)

| | Abbreviation | Compound or structure | Manufacturer and product |
|---|---|---|---|
| Cellulose Fiber F | F-1 | Cellulose nanofiber | STARCE® T-NC-374, available from SEIKO PMC CORPORATION |
| | F-2 | Cellulose microfiber | GREEN CHIP® CMF®, available from FP Chemical Industries Co., Ltd. |
| | F-3 | Fluorene cellulose fiber | Fluorene cellulose fiber, available from Osaka Gas Chemicals Co., Ltd. |

Aspects of the present disclosure include, but are not limited to the following:

Aspect 1: A PLA resin composition contains a PLA resin satisfying:

(1) the PLA resin has a melt viscosity of 2,000 to 40,000 Pa·s at 190 degrees C; and
(2) the PLA resin has a region of a weight average molecular weight Mw of 1,000 or less of 10 or less percent and a region of a weight average molecular weight Mw of 500,000 or more of 20 or more percent in the molecular weight distribution of the region of a weight average molecular weight Mw of 100 or more as measured by gel permeation chromatography (GPC), wherein the PLA resin accounts for 90 or more percent of the PLA resin composition.

Aspect 2: the polylactic acid resin composition according to Aspect 1, wherein the polylactic acid comprising D-form and L-form of lactic acid as constituent monomer units of the polylactic acid resin, either the D-form or the L-form accounting for 97 or more percent of the constituent monomers.

Aspect 3: The polylactic acid resin composition according to Aspect 1 or 2, wherein the polylactic acid resin has a weight average molecular weight Mw of 250,000 or more.

Aspect 4: The polylactic acid resin composition according to any one of Aspects 1 to 3 further contains at least one of a compound having an epoxy group, a compound having a carbodiimide group, and a cellulose compound.

Aspect 5: The polylactic acid resin composition according to any one of Aspect 1 to 4, wherein the polylactic acid accounts for 99.9 or more percent of the polylactic acid resin composition.

Aspect 6: The polylactic acid resin composition according to any one of Aspects 1 to 5, wherein the molecular weight distribution Mw/Mn of the weight average molecular weight Mw of the polylactic acid resin to a number average molecular weight Mn of the polylactic acid resin is 1.7 or more.

Aspect 7: The polylactic acid resin composition according to any one of Aspects 1 to 6, wherein the polylactic acid resin composition has a strain-hardening exponent of 2 or more, the strain-hardening exponent being calculated based on the following relationship 1 in a double logarithmic plot curve of [(time) - (uniaxial elongational viscosity)] obtained by melt uniaxial elongational viscosity measurement within a range of ±10 degrees C of a melting point of the polylactic acid resin,

$$\text{strain-hardening exponent} = a2/a1 \qquad \text{Relationship 1}$$

In Relationship 1, a1 represents the gradient in the linear region in the double logarithmic plot curve of [(time) - (uniaxial elongational viscosity)], and a2 represents the gradient in the non-linear region in the double logarithmic plot curve of [(time) - (uniaxial elongational viscosity)].

Aspect 8: A foamed polylactic acid resin manufactured by expanding the polylactic acid resin composition of any one of Aspects 1 to 7.

Aspect 9: The foamed polylactic acid resin according to Aspect 8, wherein an expansion ratio is a factor of 10 to 40.

Aspect 10: The foamed polylactic acid sheet according to Aspect 8 or 9, having a sheet-like shape.

Aspect 11: A method of manufacturing the foamed polylactic acid resin of Aspect 8 or 9, contains melting the polylactic acid resin composition of any one of Aspects 1 to 7 within a temperature range of from a melting point of the polylactic acid resin to the melting point + 40 degrees C to obtain a molten polylactic acid resin; adding a compressive fluid to be melted in the polylactic acid resin composition; and extrusion expanding the polylactic acid resin composition in a temperature range of from the melting point - 60 degrees C to the melting point + 120 degrees C.

Aspect 12: A product contains the foamed polylactic acid resin of Aspect 8 or 9.

Aspect 13: A product manufactured by molding the foamed polylactic acid resin of Aspect 8 or 9.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

**Claims**

1. A polylactic acid resin composition comprising:

   a polyactic acid resin satisfying:

   (1) the polylactic acid resin has a melt viscosity of 2,000 to 40,000 Pa·s at 190 degrees C; and
   (2) the polylactic acid resin has a region of a weight average molecular weight Mw of 1,000 or less of 10 or less percent and a region of a weight average molecular weight Mw of 500,000 or more of 20 or more percent in a region of a weight average molecular weight Mw of 100 or more of a molecular weight distribution as measured by gel permeation chromatography,

   wherein the polylactic acid resin accounts for 90 or more percent of the polylactic acid resin composition.

2. The polylactic acid resin composition according to claim 1, wherein the polylactic acid comprising D-form and L-form of lactic acid as constituent monomer units of the polylactic acid resin, either the D-form or the L-form accounting for 97 or more percent of the constituent monomers.

3. The polylactic acid resin composition according to claim 1 or 2, wherein the polylactic acid resin has a weight average molecular weight Mw of 250,000 or more.

4. The polylactic acid resin composition according to any one of claims 1 to 3, further comprising at least one of a compound having an epoxy group, a compound having a carbodiimide group, and a cellulose compound.

5. The polylactic acid resin composition according to any one of claims 1 to 4, wherein the polylactic acid accounts for 99.9 or more percent of the polylactic acid resin composition.

6. The polylactic acid resin composition according to any one of claims 1 to 5, wherein a molecular weight distribution Mw/Mn of the weight average molecular weight Mw of the polylactic acid resin to a number average molecular weight Mn of the polylactic acid resin is 1.7 or more.

7. The polylactic acid resin composition according to any one of claims 1 to 6, wherein the polylactic acid resin composition has a strain-hardening exponent of 2 or more, the strain-hardening exponent being calculated based on the following relationship 1 in a double logarithmic plot curve of [(time) - (uniaxial elongational viscosity)] obtained by melt uniaxial elongational viscosity measurement within a range of $\pm 10$ degrees C of a melting point of the polylactic acid resin,

$$\text{strain-hardening exponent} = a2/a1 \qquad \text{Relationship 1}$$

   where, a1 represents a gradient in a linear region in the double logarithmic plot curve of [(time) - (uniaxial elongational viscosity)], and a2 represents a gradient in a non-linear region in the double logarithmic plot curve of [(time) - (uniaxial elongational viscosity)].

8. A foamed polylactic acid resin manufactured by expanding the polylactic acid resin composition of any one of claims 1 to 7.

9. The foamed polylactic acid resin according to claim 8, wherein an expansion ratio is a factor of 10 to 40.

10. The foamed polylactic acid resin according to claim 8 or 9, having a sheet-like shape.

11. A method of manufacturing a foamed polylactic acid resin, comprising:

melting the polylactic acid resin composition of any one of claims 1 to 7 within a temperature range of from a melting point of the polylactic acid resin to the melting point + 40 degrees C to obtain a molten polylactic acid resin; adding a compressive fluid to be melted in the polylactic acid resin composition; and extrusion expanding the polylactic acid resin composition in a temperature range of from the melting point - 60 degrees C to the melting point + 120 degrees C.

12. A product comprising:
   the foamed polylactic acid resin of claim 8 or 9.

13. A product manufactured by molding the foamed polylactic acid resin of claim 8 or 9.

# FIG. 1

# FIG. 2

# FIG. 3

# FIG. 4

# FIG. 5

EP 4 361 206 A1

Europäisches
Patentamt

European
Patent Office

Office européen
des brevets

# EUROPEAN SEARCH REPORT

**Application Number**

EP 23 20 6518

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/023835 A1 (RICOH CO LTD [JP]; MIZOGUCHI YUKA [JP] ET AL.) 3 February 2022 (2022-02-03) * examples 3-5, 7; tables 1-3 * ----- | 1-13 | INV. C08J9/12 B29C44/34 C08G63/08 C08L67/04 |
| X | US 2015/376363 A1 (WATANABE MASAKI [JP] ET AL) 31 December 2015 (2015-12-31) * examples 1-10; tables 3-1 * ----- | 1-3,5-13 | |
| X | US 2014/336289 A1 (SHINOHARA MITSURU [JP] ET AL) 13 November 2014 (2014-11-13) * examples 1-6; tables 1-1 * ----- | 1-10,12, 13 | |

| TECHNICAL FIELDS SEARCHED (IPC) |
|---|
| C08J C09J B29C C08G C08L |

The present search report has been drawn up for all claims

| Place of search | Date of completion of the search | Examiner |
|---|---|---|
| The Hague | 14 March 2024 | Mayer, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

EP 4 361 206 A1

## ANNEX TO THE EUROPEAN SEARCH REPORT
## ON EUROPEAN PATENT APPLICATION NO.

EP 23 20 6518

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2024

| Patent document cited in search report | | Publication date | Patent family member(s) | | Publication date |
|---|---|---|---|---|---|
| WO 2022023835 | A1 | 03-02-2022 | CN | 116323770 A | 23-06-2023 |
| | | | EP | 4188997 A1 | 07-06-2023 |
| | | | JP | 2022027146 A | 10-02-2022 |
| | | | US | 2023220176 A1 | 13-07-2023 |
| | | | WO | 2022023835 A1 | 03-02-2022 |
| US 2015376363 | A1 | 31-12-2015 | CN | 104955886 A | 30-09-2015 |
| | | | EP | 2948501 A1 | 02-12-2015 |
| | | | JP | 2015120867 A | 02-07-2015 |
| | | | KR | 20150109390 A | 01-10-2015 |
| | | | US | 2015376363 A1 | 31-12-2015 |
| | | | WO | 2014115861 A1 | 31-07-2014 |
| US 2014336289 | A1 | 13-11-2014 | CN | 103890067 A | 25-06-2014 |
| | | | EP | 2772509 A1 | 03-09-2014 |
| | | | JP | 5986096 B2 | 06-09-2016 |
| | | | JP | WO2013058056 A1 | 02-04-2015 |
| | | | TW | 201333087 A | 16-08-2013 |
| | | | US | 2014336289 A1 | 13-11-2014 |
| | | | WO | 2013058056 A1 | 25-04-2013 |

EPO FORM P0459

For more details about this annex : see Official Journal of the European Patent Office, No. 12/82

**REFERENCES CITED IN THE DESCRIPTION**

**Patent documents cited in the description**

- JP 2022175118 A
- JP H8198992 A
- JP 4299490 B
- JP 2003301066 A
- JP 2022027146 A

**Non-patent literature cited in the description**

- Structure, Properties, Biodegradability of Aliphatic Polyesters. **INOUE, Y.** Polymers. 2001, vol. 50, 374-377
- **K.YANG ; R.OZISIK.** *R.Polymer,* 2006, vol. 47, 2849